(19) Europäisches Patentamt / European Patent Office / Office européen des brevets

(11) **EP 2 386 530 A1**

(12) **EUROPEAN PATENT APPLICATION**
published in accordance with Art. 153(4) EPC

(43) Date of publication:
**16.11.2011 Bulletin 2011/46**

(51) Int Cl.:
*C04B 35/46* (2006.01)     *B01D 39/20* (2006.01)
*C04B 38/00* (2006.01)     *C04B 38/06* (2006.01)

(21) Application number: **10729226.0**

(22) Date of filing: **07.01.2010**

(86) International application number:
**PCT/JP2010/050102**

(87) International publication number:
**WO 2010/079806 (15.07.2010 Gazette 2010/28)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **07.01.2009 JP 2009001613
19.03.2009 JP 2009067710
19.03.2009 JP 2009067711**

(71) Applicant: **Sumitomo Chemical Company, Limited
Tokyo 104-8260 (JP)**

(72) Inventors:
• UOE, Kousuke
  Niihama-shi
  Ehime 792-0025 (JP)
• SUZUKI, Keiichiro
  Niihama-shi
  Ehime 792-0871 (JP)
• YOSHINO, Hajime
  Niihama-shi
  Ehime 792-0009 (JP)

(74) Representative: **Vossius & Partner
Siebertstrasse 4
81675 München (DE)**

(54) **MOLDED POROUS CERAMIC ARTICLE, AND METHOD FOR MANUFACTURING SAME**

(57)    The process for producing a porous ceramics shaped body comprises a step of firing a shaped body of a starting material mixture which contains an aluminum source powder and a titanium source powder, and the aluminum source powder satisfies the below formula (1a):

$$(Da90/Da10)^{1/2} < 2 \qquad (1a)$$

wherein Da90 is a particle diameter corresponding to a cumulative percentage of 90 % on a volume basis and Da10 is a particle diameter corresponding to a cumulative percentage of 10 % on a volume basis, and these are determined from a particle size distribution of the aluminum source powder measured by a laser diffractometry.

Fig1

EP 2 386 530 A1

**Description**

TECHNICAL FIELD

The present invention relates to a technique of using an aluminum titanate-based crystal obtained by firing a mixture of an aluminum source powder and a titanium source powder, as a ceramics shaped body.

BACKGROUND ART

An aluminum titanate-based ceramics contains titanium and aluminum as the constitutive elements, and has a crystal patterns of aluminum titanate in the X-ray diffraction spectrum, and is excellent in heat resistance. An aluminum titanate-based ceramics have been conventionally used as tools for firing and the like such as crucibles. Recently, a ceramics filter for collecting fine carbon particles (diesel particulates) contained in the exhaust gas discharged from internal combustion engines such as diesel engines (Diesel Particulate Filter - hereinafter this may be referred to as DPF) is comprised of an aluminum titanate-based ceramics, and the industrial applicability of aluminum titanate-based ceramics has been increased.

As a process for producing an aluminum titanate-based ceramics, known is a process of firing a starting material mixture containing a powder of a titanium source compound such as titania and a powder of an aluminum source compound such as alumina (Patent Reference 1).

However, when a starting material powder containing an aluminum source powder and a titanium source powder or a shaped body of the starting material powder is fired to prepare aluminum titanate, then the aluminum titanate greatly shrinks in firing. When the shrinkage ratio (shrinkage ratio in firing) is high, then the shaped body of the starting material powder can be easily cracked during firing.

For reducing the shrinkage ratio in firing, in Patent Reference 2, a starting material mixture containing a $TiO_2$ powder having a specific bimodal particle size distribution and an $Al_2O_3$ powder is shaped into a honeycomb form, and the shaped body is fired to produce an aluminum titanate-based ceramics honeycomb structure. However, merely controlling the particle size distribution of the $TiO_2$ powder saturates the effect.

PRIOR ART REFERENCE

PATENT REFERENCES

Patent Reference 1: WO05/105704
Patent Reference 2: WO08/078747

DISCLOSURE OF THE INVENTION

PROBLEMS THAT THE INVENTION IS TO SOLVE

When an aluminum titanate-based ceramics shaped body is applied to a ceramics filler, the shaped body is required to be excellent in porousness (to have a high open porosity), from the viewpoint of improving the filterability (exhaust gas processing capacity, adsorption capacity of collected matter (high soot-deposition capacity), pressure loss and the like). In particular, when applied to the above-mentioned DPF, the shaped body is required to have suitably controlled pore characteristics.
An object of the invention is to provide a process for producing a porous ceramics shaped body capable of suppressing the shrinkage ratio during firing (shrinkage ratio in firing), not worsening the porousness of the shaped body even though the particle size distribution control of $TiO_2$ powder is not indispensable.
An object of the invention is to provide an aluminum titanate-based porous ceramics shaped body having excellent porousness and pore characteristics so as to be favorably applicable to filters such as DPF.

MEANS FOR SOLVING THE PROBLEMS

A process for producing of a porous ceramics shaped body in the invention comprises a step of firing a shaped body of a starting material mixture which contains an aluminum source powder and a titanium source powder, and the aluminum source powder satisfies the below formula (1a) :

$$(Da90/Da10)^{1/2} < 2 \qquad (1a)$$

wherein Da90 is a particle diameter corresponding to a cumulative percentage of 90 % on a volume basis and Da10 is a particle diameter corresponding to a cumulative percentage of 10 % on a volume basis, and these are determined from a particle size distribution of the aluminum source powder measured by a laser diffractometry.

A ratio of an $Al_2O_3$-equivalent molar amount of the aluminum source powder to a $TiO_2$-equivalent molar amount of the titanium source powder (the $Al_2O_3$-equivalent molar amount of the aluminum source powder / the $TiO_2$-equivalent molar amount of the titanium source powder) in the starting material mixture is, for example, from 35/65 to 45/55. A particle diameter D50 of the aluminum source powder corresponding to a cumulative percentage of 50 % on a volume basis measured by a laser diffractometry is, for example, from 20 to 60μm.

The molar amount of the aluminum source powder means an $Al_2O_3$ (alumina)-equivalent molar amount, and is calculated by the following formula (A) (the same shall apply hereinafter in molar amount calculation).

$$\text{Molar amount of the aluminum source powder} = (w_1 \times M_1) / (N_1 \times 2) \qquad (A)$$

In the formula (A), $w_1$ represents an amount (g) of the aluminum source powder to be used; $M_1$ represents the molar amount of aluminum in 1 mol of the aluminum source powder; $N_1$ represents the formula weight of the aluminum source powder. When two or more types of aluminum source powders are used, the molar amount of each aluminum source powder is calculated by the formula (A), and each molar amount are summed up to give the molar amount of the aluminum source powders to be used.

The molar amount of the titanium source powder means a $TiO_2$ (titania)-equivalent molar amount, and is calculated by the following formula (B) (the same shall apply hereinafter in molar amount calculation).

$$\text{Molar amount of the titanium source powder} = (w_2 \times M_2) / N_2 \qquad (B)$$

In the formula (B), $w_2$ represents an amount (g) of the titanium source powder to be used; $M_2$ represents the molar amount of titanium in 1 mol of the titanium source powder; $N_2$ represents the formula weight of the titanium source powder. When two or more types of titanium source powders are used, the molar amount of each titanium source powder is calculated by the formula (B), and each molar amount are summed up to give the molar amount of the titanium source powders to be used.

A particle diameter D50 of the titanium source powder corresponding to a cumulative percentage of 50 % on a volume basis measured by a laser diffractometry is, for example, from 0.5 to 25μm.

Preferably, the starting material mixture further contains a magnesium source powder. A particle diameter D50 of the magnesium source powder corresponding to a cumulative percentage of 50 % on a volume basis measured by a laser diffractometry is, for example, from 0.5 to 30μm. A ratio of a MgO-equivalent molar amount of the magnesium source powder to a total of a $Al_2O_3$-equivalent molar amount of the aluminum source powder and a $TiO_2$-equivalent molar amount of the titanium source powder is, for example, from 0.03 to 0.15.

The molar amount of the magnesium source powder means a MgO (magnesia)-eqaivalent molar amount, and is calculated by the following formula (C) (the same shall apply hereinafter in molar amount calculation.

$$\text{Molar amount of the magnesium source powder} = (w_3 \times M_3) / N_3 \qquad (C)$$

In the formula (C), $w_3$ represents an amount (g) of the magnesium source powder to be used; $M_3$ represents the molar amount of magnesium in 1 mol of the magnesium source powder; $N_3$ represents the formula weight of the magnesium source powder. When two or more types of magnesium source powders are used, the molar amount of each magnesium source powder is calculated by the formula (C), and each molar amount are summed up to give the molar amount of the magnesium source powders to be used.

Preferably, the starting material mixture further contains a silicon source powder. The silicon source powder is, for example, feldspar, glass frit, or a mixture thereof. A particle diameter D50 of the silicon source powder corresponding to a cumulative percentage of 50 % on a volume basis measured by a laser diffractometry is, for example, from 0.5 to 30μm.

Preferably, the starting material mixture further contains a pore-forming agent. The pore-forming agent preferably satisfies a below formula (1b).

$$(Db90/Db10)^{1/2} < 2 \quad (1b)$$

(In the formula Db90 is a particle diameter corresponding to a cumulative percentage of 90 % on a volume basis and Db10 is a particle diameter corresponding to a cumulative percentage of 10 % on a volume basis, and these are determined from a particle size distribution of the pore-forming agent measured by a laser diffractometry.)

A particle diameter D50 of the pore-forming agent corresponding to a cumulative percentage of 50 % on a volume basis measured by a laser diffractometry is, for example, from 10 to 50μm.

Preferably, the shaped body is a honeycomb.

The invention includes a porous ceramics shaped body which is excellent especially in porousness and pore characteristics. The shaped body is formed of an aluminum titanate-based crystal, an open porosity thereof is 35 % or more and a pore diameter distribution thereof measured by a mercury intrusion technique satisfies a below formula (2) and (3).

$$V_{4-20} / V_{total} \geq 0.8 \quad (2)$$

$$V_{20-200} / V_{total} \leq 0.1 \quad (3)$$

(In the formula, $V_{4-20}$ is a cumulative pore volume of pores having a pore diameter of from 4μm to 20μm, $V_{20-200}$ is a cumulative pore volume of pores having a pore diameter of from 20μm to 200μm, and $V_{total}$ is a cumulative pore volume of pores having a pore diameter of from 0.005μm to 200μm.)

Preferably, the open porosity is 45 % or more.

The porous ceramics shaped body formed of aluminum titanate-based crystal in the invention may be excellent especially in pore characteristics. The shaped body shows the following characteristics. That is,

when the shaped body or a test piece cut out of the shaped body is dipped in water and when a gas pressurized up to a gauge pressure of 12 kPa is applied to any one of surface of the shaped body or the test piece, foams of the gas are not released from any surface differing from the surface to which the gas has been applied, and

when the shaped body or the test piece cut out of the shaped body is dipped in 100% ethanol and when a gas pressurized up to a gauge pressure of 12 kPa is applied to any one of surface of the shaped body or the test piece, foams of the gas are released from a surface differing from the surface to which the gas has been applied.

When the porous ceramics shaped body which is excellent especially in pore characteristics has one or more hollow spaces inside it, the shaped body shows the following characteristics. That is,

when a test piece, as prepared by catting the shaped body to give a columnar hollow piece having the above-mentioned one hollow space as a through-hole in the lengthwise direction and by sealing up one end in the lengthwise direction of the hollow piece, is dipped in water and when a gas pressurized up to a gauge pressure of 12 kPa is applied to the test piece from the open end of the through-hole thereof, foams of the gas are not released from at least a part of the surface except both ends in the lengthwise direction of the test piece, and

when the test piece after the water-dipping test is dipped in 100% ethanol and when a gas pressurized up to a gauge pressure of 12 kPa is applied thereto from the open end of the through-hole, foams of the gas are released from a surface except both ends in the lengthwise direction of the test piece.

Preferably, the porous ceramics shaped body satisfies the open porosity mentioned above, and the formulae (2) and (3).

The invention includes a test method for evaluating a pore structure of a porous ceramics shaped body. In the test method, the shaped body or a test piece cut out of the shaped body is dipped in a liquid phase, then a pressurized gas is applied to any surface of the shaped body or the test piece, and the presence or absence of foaming of the gas from a surface differing from the surface to which the gas has been applied is checked. In the case where the porous ceramics shaped body has one or more hollow spaces inside it, a test piece, as prepared by cutting the shaped body to give a columnar hollow piece having the above-mentioned one hollow space as the through-hole in the lengthwise direction and by sealing up one end in the lengthwise direction thereof, is dipped in a liquid phase, then a pressurized gas is applied to the open end of the through-hole, and the presence or absence of foaming of the gas from the surface except both ends in the lengthwise direction of the test piece is checked.

The liquid phase is, for example, selected from water, alcohol, or a mixed solvent of water and alcohol. Using two or more types of liquid phases of these, measuring a presence or absence of the foaming in each liquid phase, and knowing the relationship between the type or composition of a liquid phase and the presence or absence of foaming, thereby the pore structure of the porous ceramics shaped body can be evaluate more concretely.

EFFECT OF THE INVENTION

By the process of the invention, the shrinkage ratio (shrinkage ratio in firing) of the shaped body of the starting material powder in producing an aluminum titanate-based fired body can be suppressed low. Even though the $TiO_2$ powder control is not indispensable, the porousness of the obtained, aluminum titanate-based fired body (porous ceramics shaped body) is not worsened.

By the invention, a porous ceramics shaped body having suitably controlled pore characteristics can be provided. The porous ceramics shaped body of the invention has excellent pore characteristics capable of improving the filterability of ceramics filters such as DPF.

Further, by the test method of the invention, it is possible to simply and visually evaluate the pore structure of a porous ceramics shaped body.

BRIEF DESCRIPTION OF THE DRAWINGS

[Fig. 1] Fig. 1 is a partly enlarged use situation view of a hollow test piece cut out of a porous ceramics honeycomb structure.
[Fig. 2] Fig. 2 is a schematic view for explaining a foaming test method.
[Fig. 3] Fig. 3 is a cross-sectional view of a honeycomb shaped body of Examples.

MODE FOR CARRYING OUT THE INVENTION

(1) Process for producing a Porous Ceramics Shaped Body

The porous ceramics shaped body is formed of an aluminum titanate-based crystal. The porous ceramics shaped body is produced by firing a shaped body of a starting material mixture containing an aluminum source powder and a titanium source powder.

(1.1) Aluminum Source Powder

The aluminum source powder will become the aluminum ingredient of the aluminum titanate-based crystal. The aluminum source powder includes, for example, a powder of alumina (aluminum oxide). The alumina may be crystalline or amorphous. When the alumina is crystalline, the crystal form includes a γ form, a δ form, a θ form, and an α form. An α-type alumina is preferably used.

The aluminum source powder may also be a powder of a material capable of being led to alumina by firing in air. The material includes, for example, aluminum salt, aluminum alkoxide, aluminum hydroxide, and aluminum metal.

The aluminum salt may be an inorganic salt or an organic salt. The inorganic salt includes, for example, nitrates such as aluminum nitrate, ammonium aluminum nitrate; and carbonates such as ammonium aluminum carbonate. The organic salt includes, for example, aluminum oxalate, aluminum acetate, aluminum stearate, aluminum lactate, and aluminum laurate.

The aluminum alkoxide includes, for example, aluminum isopropoxide, aluminum ethoxide, aluminum sec-butoxide, and aluminum tert-butoxide.

The aluminum hydroxide may be crystalline or amorphous. When the aluminum hydroxide is crystalline, the crystal form includes, for example, a gibbsite form, a bayerite form, a norstrandite form, a boehmite form, and a pseudo-boehmite form. Amorphous aluminum hydroxide includes, for example, an aluminum hydrolyzate to be obtained by hydrolysis of an aqueous solution of a water-soluble aluminum compound such as aluminum salt, aluminum alkoxide.

As the aluminum source powder, one type alone may be used or two or more types may be used in combination with each other. The aluminum source powder may contain minor components that are derived from the starting materials thereof or are inevitably contained in the production process.

An alumina powder is preferred as the aluminum source powder, and an α-type alumina powder is more preferred.

The aluminum source powder satisfies the following formula (1a).

$$(Da90/Da10)^{1/2} < 2 \qquad\qquad (1a)$$

In the above formula (1a), Da90 is a particle diameter corresponding to a cumulative percentage of 90% on a volume basis, and Da10 is a particle diameter corresponding to a cumulative percentage of 10% on a volume basis. These are determined from the particle size distribution of the aluminum source powder measured by a laser diffractometry.

The above formula (1a) means that Da90/Da10 is relatively small, indicating that the particle size distribution of the aluminum source powder to be used is relatively narrow (sharp) . Using an aluminum source powder having a sharp particle size distribution makes it possible to fully reduce the shrinkage ratio in firing, whereby cracking and the like of the shaped body in firing can be evaded. In using such an aluminum source powder having a sharp particle size distribution, the porousness (large pore size, large open porosity and the like) of the porous ceramics shaped body and the pore characteristics thereof (for example, $V_{4-20}/V_{total}$ value, $V_{20-200}/V_{total}$ value, foaming test characteristics and the like mentioned below) do not worsen but these properties may be rather improved further more.

More preferably, $(Da90/Da10)^{1/2}$ is 1. 9 or less. Reducing $(Da90/Da10)^{1/2}$ can further reduce the shrinkage ratio in firing. Preferably, $(Da90/Da10)^{1/2}$ is 1.1 or more, more preferably 1.3 or more. When $(Da90/Da10)^{1/2}$ is 1.1 or more, then the formation of aluminum titanate in firing can be promoted.

The aluminum source powder to be used in the invention may have a single modal particle size distribution or a bimodal particle size distribution or may have three or more particle size peaks, so far as the powder satisfies the above formula (1a) .

Preferably, a particle diameter corresponding to a cumulative percentage of 50% on a volume basis (D50) of the aluminum source powder, measured by a laser diffractometry, is from 20 to 60 μm. Controlling D50 to fall within the range further betters the shrinkage ratio in firing, the porousness (pore size, open porosity), the pore characteristics ($V_{4-20}/V_{total}$ value, $V_{20-200}/V_{total}$ value, foaming test characteristics) and the like. More preferably, D50 is from 30 to 60 μm, even more preferably from 35 to 50 μm.

As the aluminum source powder satisfying the above formula (1a) and optionally having D50 to fall within the above range, commercial products may be used directly. Commercial products of an aluminum source powder may be processed, for example, in the manner mentioned below to thereby give the aluminum source powder satisfying the above formula (1a) and optionally having D50 to fall within the above range.

(a) A commercial product of an aluminum source powder is classified by sieving and the like.
(b) A commercial product of an aluminum source powder is granulated with a granulator and the like.

(1.2) Titanium Source Powder

The titanium source powder will become the titanium ingredient of the aluminium titanate-based crystal. The titanium source powder includes, for example, a powder of titanium oxide. Titanium oxide includes, for example, titanium (IV) oxide, titanium(III) oxide, and titanium(II) oxide. Titanium(IV) oxide is preferably used. The titanium(IV) oxide may be crystalline or amorphous. When the titanium(IV) oxide is crystalline, the crystal form thereof includes an anatase form, a rutile form, and a brookite form. More preferred is an anatase-form or rutile-form titanium(IV) oxide.

The titanium source powder may be a powder of a material capable being led to titania (titanium oxide) by firing in air. The material includes, for example, titanium salt, titanium alkoxide, titanium hydroxide, titanium nitride, titanium sulfide, and titanium metal.

The titanium salt includes titanium trichloride, titanium tetrachloride, titanium(IV) sulfide, titanium(VI) sulfide, and titanium(IV) sulfate. The titanium alkoxide includes titanium(IV) ethoxide, titanium(IV) methoxide, titanium(IV) t-butoxide, titanium(IV) isobutoxide, titanium(IV) n-propoxide, titanium(IV) tetraisopropoxide, and their chelate compounds.

As the titanium source powder, one type alone may be used or two or more types may be used in combination with each other. The titanium source powder may contain minor components that are derived from the starting materials thereof or are inevitably contained in the production process.

Of the above, a titanium oxide powder is preferred as the titanium source powder, and a titanium(IV) oxide powder is more preferred.

The particle diameter of the titanium source powder is not specifically limited, but the particle diameter thereof corresponding to a cumulative percentage of 50% on a volume basis (D50) to be measured by a laser diffractometry is, for example, from 0.5 to 25 μm, preferably from 0.7 to 5 μm or so. Controlling the particle diameter of the titanium source powder makes the texture structure of the aluminum titanate-based crystal homogeneous. In addition, controlling the particle diameter of the titanium source powder further reduces the shrinkage ratio in firing. By reducing the shrinkage ratio in firing, the mechanical strength and the pore characteristics of the porous ceramics shaped body can be improved.

The titanium source powder may have a single modal particle size distribution or a bimodal particle size distribution or may have three or more particle size peaks. As to the bimodal titanium source powder, the particle size peak of larger particles is preferably from 20 to 50 μm.

The mode diameter of the titanium source powder to be measured by a laser diffractometry is not specifically limited, but for example, from 0.3 to 60 μm.

The ratio of the $Al_2O_3$ (alumina) -equivalent molar amount of the aluminum source powder to the $TiO_2$ (titania) -equivalent molar amount of the titanium source powder in the starting material mixture (molar amount of the aluminum source powder/molar amount of the titanium source powder) is preferably from 35/65 to 45/55, more preferably from 40/60 to 45/55. When the molar amount of the aluminum source powder and the molar amount of the titanium source powder fall within the range, then the shrinkage ratio in firing of the shaped body of the starting material mixture can be more effectively reduced. In addition, the aluminum titanate conversion reaction may go on rapidly.

(1.3) Magnesium Source Powder

The starting material mixture may contain a magnesium source powder. When the starting material mixture contains a magnesium source powder, the porous ceramics shaped body is formed of an aluminum magnesium titanate crystal.

The magnesium source powder includes a powder of magnesia (magnesium oxide) and a powder of a material capable being led to magnesia by firing in air. Examples of the latter include, for example, magnesium salt, magnesium alkoxide, magnesium hydroxide, magnesium nitride, and magnesium metal.

The magnesium salt includes magnesium chloride, magnesium perchlorate, magnesium phosphate, magnesium pyrophosphate, magnesium oxalate, magnesium nitrate, magnesium carbonate, magnesium acetate, magnesium sulfate, magnesium citrate, magnesium lactate, magnesium stearate, magnesium salicylate, magnesium myristate, magnesium gluconate, magnesium dimethacrylate, and magnesium benzoate.

The magnesium alkoxide includes magnesium methoxide, and magnesium ethoxide.

As the magnesium source powder, also usable is a powder of a material serving both as a magnesium source and an aluminum source. The substance includes, for example, magnesia spinel ($MgAl_2O_4$) When a powder of a material serving both as a magnesium source and an aluminum source is used as the magnesium source powder, the amount thereof is so controlled that the molar ratio of the total amount of the $Al_2O_3$ (alumina)-equivalent amount of the aluminum source powder and the $Al_2O_3$ (alumina)-equivalent amount of the Al ingredient contained in the powder of the substance serving both as a magnesium source and an aluminum source, to the $TiO_2$ (titania)-equivalent amount of the titanium source powder could fall within the above-mentioned range in the starting material mixture.

As the magnesium source powder, one type alone may be used or two or more types may be used in combination with each other. The magnesium source powder may contain minor components that are derived from the starting materials thereof or are inevitably contained in the production process.

The particle diameter of the magnesium source powder is not specifically limited, but the particle diameter thereof corresponding to a cumulative percentage of 50% on a volume basis (D50) to be measured by a laser diffractometry, is, for example, from 0.5 to 30 μm, preferably from 3 to 20 μm. Controlling the particle diameter of the magnesium source powder can further reduce the shrinkage ratio in firing.

The ratio of the MgO (magnesia) -equivalent molar amount of the magnesium source powder to the total of the $Al_2O_3$ (alumina)-equivalent molar amount of the aluminum source powder and the $TiO_2$ (titania)-equivalent molar amount of the titanium source powder in the starting material mixture is preferably from 0.03 to 0.15, more preferably from 0.03 to 0.12. Controlling the content of the magnesium source powder enhances the heat resistance of the porous ceramics shaped body. In addition, the porousness of the porous ceramics shaped body can be thereby readily improved.

(1.4) Silicon Source Powder

The starting material mixture may further contain a silicon source powder. The silicon source powder forms a silicate glass phase. The silicate glass phase is compounded with the aluminum titanate-based crystal in the porous ceramics shaped body. Use of a silicon source powder in the porous ceramics shaped body can improve the heat resistance of the body. In particular, use of a silicon source powder in combination with a pore forming agent to be mentioned below can remarkably improve the porousness (especially open porosity) and the pore characteristics of the porous ceramics shaped body.

The silicon source powder includes, for example, a powder of silicon oxide (silica) such as silicon dioxide and silicon monoxide. The silicon source powder may also be a powder of a material capable of being led to silica ($SiO_2$) by firing in air. The material includes, for example, silicic acid, silicon carbide, silicon nitride, silicon sulfide, silicon tetrachloride, silicon acetate, sodium silicate, sodium orthosilicate, silicon resin, feldspar, glass frit, and glass fiber. Above all, feldspar, glass frit and the like are preferably used. Glass frit and the like are more preferably used from the viewpoint of easiness of industrial availability and stable composition thereof. Glass frit is a flaky or powdery material to be obtained by grinding glass. As the silicon source powder, also preferred is use of a mixed powder of feldspar and glass frit.

The yield point of glass frit is preferably 700°C or higher. Use of glass frit having a high yield point improves the thermal decomposition resistance of the porous ceramics shaped body. The yield point of glass frit is measured with a thermo-mechanscal analyzer (TMA). The yield point of glass frit is defined as the temperature (°C) at which expansion changes into shrinkage ratio in the heating process of glass frit.

As the glass constituting the above-mentioned glass frit, usable is ordinary silicate glass that comprises silicic acid $SiO_2$ as the main ingredient thereof (contained in an amount of more than 50% by mass of all the constitutive ingredients). Like an ordinary silicate glass, the glass constituting the glass frit may contain alumina [$Al_2O_3$], sodium oxide [$Na_2O_3$], potassium oxide [$K_2O$], calcium oxide [$CaO$], magnesia [$MgO$] and the like. The glass constituting the glass frit may contain $ZrO_2$ for improving the hot water resistance of the glass itself.

As the silicon source powder, one type alone may be used or two or more types may be used in combination with each other. The silicon source powder may contain minor components that are derived from the starting materials thereof or are inevitably contained in the production process.

The particle diameter of the silicon source powder is not specifically limited, but the particle diameter thereof corresponding to a cumulative percentage of 50% on a volume basis (D50)to be measured by a laser diffractometry, is, for example, from 0.5 to 30 $\mu$m, preferably from 1 to 20 $\mu$m. Controlling D50 can improve the filling rate of the shaped body of the starting material mixture, therefore can improve the mechanical strength of the porous ceramics shaped body.

When the starting material mixture contains a silicon source powder, the ratio of the $SiO_2$-equivalent molar amount of the silicon source powder to the total of the $Al_2O_3$-equivalent molar amount of the aluminum source powder and the $TiO_2$-equivalent molar amount of the titanium source powder in the starting material mixture is preferably from about 0.0011 to about 0.123, more preferably 0.073 or less.

The $SiO_2$-equivalent molar amount of the silicon source powder may be determined by the following formula (D) (the same shall apply hereinafter in molar amount calculation).

$$\text{SiO}_2\text{-equivalent molar amount of silicon source powder}$$

$$= (w_4 \times M_4) / N_4 \qquad (D)$$

In the formula (D), $w_4$ represents the amount (g) of the silicon source powder to be used, $M_4$ represents the molar amount of silicon in one mol of the silicon source powder, $N_4$ represents the formula weight of the silicon source powder. When two or more types of silicon source powders are used, the molar amount of each silicon source powder is individually calculated by the formula (D), and each molar amount are summed up to give the molar amount of the silicon source powders to be used.

The content of the silicon source powder may be determined on a mass basis. The content of the silicon source powder may be preferably 5% by mass or less, more preferably 4% by mass or less of the inorganic ingredients contained in the starting material mixture. When the amount of the silicon source powder is 5% by mass or less, then the porousness (especially open porosity) and the pore characteristics ($V_{4-20}/V_{total}$ value, $V_{20-200}/V_{total}$ value, foaming test characteristics) can be further improved. The content of the silicon source powder is preferably 2% by mass or more, more preferably 3% by mass or more of the inorganic ingredients. The inorganic ingredients are ingredients that contain elements to constitute the porous ceramics shaped body, and are typically the aluminum source powder, the titanium source powder, the magnesium source powder and the silicon source powder. However, in the case when the additives (pore forming agent, binder, lubricant, plasticizer, dispersant and the like) contained in the starting material mixture contain inorganic ingredients, the inorganic ingredients in the additives are also included as the inorganic ingredients.

In the invention, a material containing two or more metal elements of titanium, aluminum, silicon and magnesium, such as a composite oxide of the above-mentioned magnesia spinel ($MgAl_2O_4$) and the like, may be used as the starting material powder. The material is equivalent to the mixture to be prepared by mixing the individual metal source powders. Based on this consideration, the content of the aluminum source powder, the titanium source powder, the magnesium source powder and the silicon source powder is determined.

The starting material mixture may contain aluminum titanate or aluminum magnesium titanate itself. For example, when aluminum magnesium titanate is used as the constitutive ingredient of the starting material mixture, the aluminum magnesium titanate corresponds to a starting material that serves as the titanium source, the aluminum source and the magnesium source.

(1.5) Pore Forming Agent

The starting material mixture may further contain a pore forming agent. Use of a pore forming agent therein easily improves the porousness and the pore characteristics.
The pore forming agent includes, for example, resins such as polyethylene, polypropylene, and polymethylmethacrylate, and hollow particles of such resins; vegetable materials such as starch, nut-shell, walnut-shell, corn, and corn starch; and carbon materials such as graphite. The pore forming agent may serve also as the inorganic ingredient to constitute the starting material mixture. The pore forming agent which can be used as the inorganic ingredient includes, for example, alumina hollow beads, titania hollow beads, and hollow glass beads. In addition, a solid ingredient capable of gasifying by heat, such as ice and dry ice, is also usable as the pore forming agent. Preferably, the pore forming agent stably exists as solid at room temperature.

Preferably, the pore forming agent satisfies the following formula (1b):

$$(Db90/Db10)^{1/2} < 2 \qquad (1b)$$

In the above formula (1b), Db90 is a particle diameter corresponding to a cumulative percentage of 90% on a volume basis, and Db10 is a particle diameter corresponding to a cumulative percentage of 10% on a volume basis, and these are determined from the particle size distribution of the pore forming agent measured by laser diffractometry.

The above formula (1b) indicates a narrow particle size distribution. Use of such pore forming agent makes it possible to obtain a porous ceramics shaped body having a remarkably high open porosity. $(Db90/Db10)^{1/2}$ is preferably 1.8 or less, more preferably 1.6 or less. $(Db90/Db10)^{1/2}$ is preferably 1.2 or more.

The particle diameter corresponding to a cumulative percentage of 50% on a volume basis (D50) of the pore forming agent to be measured by a laser diffractometry, is preferably from 10 to 50 $\mu$m, more preferably from 12 to 35 $\mu$m. Controlling D50 of the pore forming agent can efficiently increase the open porosity.

As the pore forming agent satisfying the above formula (1b) and optionally having D50 within the above range, commercial products may be used directly. Commercial products of a pore forming agent may be processed, for example, in the manner mentioned below to thereby give the pore forming agent satisfying the above formula (1b) and optionally having D50 to fall within the above range.

　　　(a) A commercial product of a pore forming agent is classified by sieving and the like.
　　　(b) A commercial product of a pore forming agent is granulated with a granulator and the like.

In the invention, use of a pore forming agent as above is preferred. When a pore forming agent is used, the content of the pore forming agent contained in the starting material mixture is generally from 2 to 40 parts by mass, preferably from 5 to 25 parts by mass relative to 100 parts by mass of the total of the aluminum source powder, the titanium source powder, the magnesium source powder and the silicon source powder. When the content of the pore forming agent is 2 parts by mass or more, then a porous ceramics shaped body having a high open porosity can be easily obtained. When the added amount of the pore forming agent is more than 40 parts by mass, then the shrinkage ratio in firing of the starting material mixture shaped body may tend to increase and the mechanical strength of the porous ceramics shaped body may tend to be lowered.

(1.6) Additives

The starting material mixture may further contain additives. The additives include a binder, a lubricant, a plasticizer, a dispersant, a solvent and the like. These additives are used especially in extruding the starting material mixture. The binder includes celluloses such as methyl cellulose, carboxymethyl cellulose, sodium carboxymethyl cellulose; alcohols such as polyvinyl alcohol; salts such as lignin sulfonate; waxes such as paraffin wax, microcrystalline wax; and thermoplastic resins such as EVA, polyethylene, polystyrene, liquid-crystal polymer, engineering plastics. The amount of the binder to be added is generally 20 parts by mass or less, preferably from 5 to 25 parts by mass relative to 100 parts by mass of the total of the aluminum source powder, the titanium source powder, the magnesium source powder and the silicon source powder, preferably 15 parts by mass or less.

The lubricant and the plasticizer include alcohols such as glycerin; higher fatty acids such as caprylic acid, lauric acid, palmitic acid, alginic acid, oleic acid, stearic acid; and metal salts of stearic acid such as aluminum stearate.

The amount of the lubricant and the plasticizer to be added is generally from 0 to 10 parts by mass, preferably from 1 to 5 parts by mass relative to 100 parts by mass of the total of the aluminum source powder, the titanium source powder, the magnesium source powder and the silicon source powder.

The dispersant includes, for example, inorganic acids such as nitric acid, hydrochloric acid, sulfuric acid; organic acids such as oxalic acid, citric acid, acetic acid, malic acid, lactic acid; alcohols such as methanol, ethanol, propanol; and surfactants such as ammonium polycarboxylate, polyoxyalkylene alkyl ether. The amount of the dispersant to be added is generally from 0 to 20 parts by mass, preferably from 2 to 8 parts by mass relative to 100 parts by mass of the total of the aluminum source powder, the titanium source powder, the magnesium source powder and the silicon source powder.

The solvent includes, for example, monoalcohols such as methanol, ethanol, butanol, propanol; dialcohols such as propylene glycol, polypropylene glycol, ethylene glycol; and water. Above all, water is preferred, and ion-exchanged water is more preferred from the view point of less impurities. The amount of the solvent to be used is generally from 10 parts by mass , preferably from 20 parts by mass to 80 parts by mass to 100 parts by mass relative to 100 parts by mass of the total of the aluminum source powder, the titanium source powder, the magnesium source powder and the silicon source powder.

The starting material mixture in the invention may be good to contain the aluminum source powder and the titanium source powder of the above-mentioned various starting materials, but the preferred starting material mixture contains the aluminum source powder, the titanium source powder, the silicon source powder and the pore forming agent. In addition, in the preferred starting material mixture, both the aluminum source powder and the pore forming agent satisfy the following formula (1):

$$(D90/D10)^{1/2} < 2 \qquad\qquad (1)$$

In the formula (1), D90 is a particle diameter corresponding to a cumulative percentage of 90% on a volume basis, and D10 is a particle diameter corresponding to a cumulative percentage of 10% on a volume basis. These D90 and D10 are determined from the particle size distribution measured by laser diffractometry. In the more preferred starting material mixture, the content of the silicon source powder is 5% by mass or less of the inorganic ingredients contained in the starting material mixture. Use of the preferred starting material mixture can remarkably increase the open porosity (for example, up to 45% or more) of the porous ceramics shaped body to be obtained. In addition, the pore characteristics ($V_{4-20}/V_{total}$ value, $V_{20-200}/V_{total}$ value, foaming test characteristics) of the porous ceramics shaped body can be thereby remarkably bettered.

(1.7) Starting material Mixture Shaped Body

In the invention, the necessary ingredients are selected from the above-mentioned various materials, and these are mixed (kneaded) and shaped. Before fired, the mixture is shaped, and therefore, as compared with that in the case where the starting material mixture is directly fired, the shrinkage in firing can be suppressed. Accordingly, the obtained ceramics shaped body can be effectively prevented from being cracked. In addition, the pore form of the porous aluminum titanate crystal formed by firing can be maintained.

The shape of the shaped body is not specifically limited, and includes, for example, a honeycomb shape, a rod shape, a tubular shape, a tabular shape, and a crucible-like shape. When the porous ceramics shaped body is applied to ceramics filters and the like such as DPF, the shaped body preferably has a honeycomb shape.

For shaping the starting material mixture, usable is a shaping machine such as a uniaxial press, an extruder, a tabletting machine, and a granulator.

(1.8) Firing

A porous ceramics shaped body is obtained by firing the above-mentioned starting material mixture. The firing temperature is generally 1300°C or higher, preferably 1400°C or higher. The firing temperature is generally 1650°C or lower, preferably 1550°C or lower. The heating rate up to the firing temperature is not specifically limited, but generally from 1°C/hr to 500°C/hr. When a silicon source powder is used, preferably, a step of keeping the mixture in a temperature range of from 1100°C to 1300°C for 3 hours or more is provided prior to the firing step. Accordingly, fusion and diffusion of the silicon source powder can be promoted. When the starting material mixture contains an additive combustible organic matter such as a binder, the firing process includes a degreasing step of removing it. Degreasing is carried out typically in the heating stage (for example, within a temperature range of from 150 to 400°C) up to the firing temperature. In the degreasing step, the heating rate is preferably suppressed as much as possible.

The time to be taken for the firing may be a time enough for transition of the starting material mixture into an aluminum titanate-based crystal, and the time is generally from 10 minutes to 24 hours, though varying depending on the amount of the starting material mixture, the type of the firing furnace, the firing temperature, the firing atmosphere and the like.

In general, the firing is attained in air, or under a lower oxygen partial pressure for moderate combustion. The mixture may be fired in an inert gas such as nitrogen gas or argon gas, or may be fired in a reducing gas such as carbon monoxide gas or hydrogen gas, depending on the type and the used amount ratio of the aluminum source powder, the titanium source powder, the silicon source powder, the magnesium source powder, the pore forming agent, the binder and the like. In addition, the firing may be carried out in an atmosphere where the water vapor partial pressure is reduced.

In general, the firing is carried out using an ordinary firing furnace such as a tubular electric furnace, a boxy electric furnace, a tunnel furnace, a far-IR furnace, a microwave heating furnace, a shaft furnace, a reverberating furnace, a rotary furnace, or a roller hearth furnace. The firing may be carried out by batch process, or may be carried out by continuous process. The firing may be carried out in a static mode or may be carried out in a fluidized mode.

(2) Porous Ceramics Shaped Body

(2.1) Porous Ceramics Shaped Body

In the manner described above, a porous ceramics shaped body (this may be referred to as an aluminum titanate-based fired body) can be obtained. The porous ceramics shaped body keeps approximately the same shape as that of the starting material mixture immediately after shaping thereof. The obtained porous ceramics shaped body can be processed into a desired form by grinding process and the like.

The porous ceramics shaped body obtained as above is formed of an aluminum titanate-based crystal. The aluminum titanate-based crystal includes aluminum titanate-based crystal, aluminum magnesium titanate-based crystal and the like, and these are the main crystal phase in the porous ceramics shaped body. The porous ceramics shaped body may be formed of mainly an aluminum titanate crystal.

The porous ceramics shaped body may contain any other phase (especially a crystal phase) than the aluminum titanate-based crystal. The other phase except the aluminum titanate-based crystal includes phases derived from a starting material. The phases derived from a starting material are, for example, phases derived from aluminum source powder, titanium source powder and/or magnesium source powder having remained in the body not forming an aluminum titanate-based phase. Sometimes the porous ceramic shaped body may contain a silicate glass phase that is derived from a silicon source powder. Further, the porous ceramics shaped body may contain minor components that are derived from the starting materials or are inevitably contained in the production process.

Accordingly, the porous ceramics shaped body shows crystal patterns of aluminum titanate or aluminum magnesium titanate in the X-ray diffraction spectrum. In addition, the X-ray diffraction spectrum may include crystal patterns of alumina, titania and the like. When the porous ceramic shaped body comprises an aluminum magnesium titanate crystal (compositional formula: $Al_{2(1-x)} Mg_x Ti_{(1+x)}O_5$), x is, for example, 0.03 or more, preferably from 0.03 to 0.15, more preferably from 0.03 to 0.12.

The porous ceramics shaped body can be used, for example, as ceramics filters. Ceramics filters include exhaust gas filters (especially DPF) to be used for exhaust gas purification in internal combustion engines such as diesel engines, gasoline engines; filtration filters for edibles such as beer; and selective permeation filters for selectively permeating vapor components formed in oil purification, such as carbon monoxide, carbon dioxide, nitrogen, oxygen. In addition, the porous ceramics shaped body is also favorably applicable to tools for firing furnaces such as crucibles, setters, saggers, refractories; catalyst carriers; electronic parts such as substrates, capacitors and the like. Above all, when the porous ceramics shaped body of the invention is used as ceramics filters and the like, the shaped body can maintain good filterability for a long period of time, as the shaped body is excellent in porousness and pore characteristics.

The shape of the porous ceramics shaped body is specifically limited, and may be a honeycomb shape, a rod shape, a tubular shape, a tabular (sheet-like) shape, a crucible-like shape and the like. When the porous ceramics shaped body is applied to ceramics filters such as DPF, the shaped body preferably has a honeycomb shape.

The porous ceramic shaped body preferably has one or more hollow spaces inside it. The shaped body having one or more hollow spaces inside it may have hollow spaces inside it which are closed space, or may have hollow spaces which are through-holes opened through the outer surface of the shaped body. Such shaped body includes a honeycomb-like porous ceramics shaped body (porous ceramic honeycomb structure) having multiple cells (hollow spaces) running through the inside in the lengthwise direction thereof; a hollow (for example, pipe-like) porous ceramic shaped body and the like.

(2.2) Preferred Porous Ceramics Shaped Body

Of the above-mentioned ceramics shaped body, the invention also includes those which are especially excellent in porousness and pore characteristics. The porous ceramics shaped body which is especially excellent in porousness and pore characteristics can be produced by selecting preferred ranges from the above-mentioned ingredient, particle size distribution, firing condition and the like.

The preferred porous ceramics shaped body has an open porosity of 35% or more, preferably 45% or more, and has pore characteristics indicated by the following (i) or (ii), preferably by the following (i) and (ii).

(i) The pore diameter distribution measured by a mercury intrusion technique satisfies the following formulae (2) and (3) :

$$V_{4-20}/V_{total} \geq 0/8 \qquad (2)$$

$$V_{20-200}/V_{total} \leq 0.1 \qquad (3)$$

In the formulae (2) and (3), $V_{4-20}$ is a cumulative pore volume of the pores having a pore diameter of from 4 to 20 $\mu$m, $V_{20-200}$ is a cumulative pore volume of the pores having a pore diameter of from 20 to 200 $\mu$m, is a cumulative pore volume of the pores having a pore diameter of from 0.005 to 200 $\mu$m.

(ii) When the porous ceramics shaped body or a test piece cut out of the shaped body is dipped in a liquid phase and when a gas such as air pressurized up to a gauge pressure of 12 kPa is applied to any surface of the shaped body or the test piece, the shaped body or the test piece exhibits predetermined foaming test characteristics. In other words, when the shaped body or the test piece is dipped in water, foams of the gas are not released from any surface differing from the surface to which the gas has been applied. When the shaped body or the test piece is dipped in 100% ethanol (pure ethanol), foams of the gas are released from a surface differing from the surface to which the gas has been applied.

(2.3) Open Porosity

"Open Porosity" is the open porosity (%)measured by an Archimedes method by dipping in water according to JIS R1634. Specifically, the open porosity of the porous ceramics shaped body is calculated by the following formula:

$$Open\ Porosity\ (\%) = 100 \times (M3 - M1)/(M3 - M2).$$

M1 is the dry weight (g) of the porous ceramics shaped body, M2 is the weight (g) in water of the porous ceramics shaped body, and M3 is the water-saturated weight (g) of the porous ceramics shaped body.

When the open porosity of the porous ceramics shaped body is 35% or more, then the filterability thereof can be enhanced when the porous ceramics shaped body is used as ceramic filters such as DPF. Specifically, the collecting capacity (adsorbing capacity) for the matters to be trapped such as diesel particulates is enhanced. In addition, the pressure loss of the gas to be treated for filtration (exhaust gas discharged from diesel engines and the like) can be reduced. The open porosity may be, for example, less than 45% or so; however, when it is 45° or more, the filterability may be further enhanced. The uppermost limit of the open porosity is not specifically limited, but from the viewpoint of the mechanical strength of the porous ceramics shaped body, the limit is preferably 60% by volume or less.

(2.4) $V_{4-20}$ Value, $V_{20-200}/V_{total}$ Value

The above-mentioned $V_{4-20}V_{total}$ value (formula 2) and $V_{20-200}/V_{total}$ value (formula 3) are to define the pore diameter distribution of the pores that the porous ceramics shaped body has. In the porous ceramics shaped body satisfying the formula 2 and the formula 3, the cumulative pore volume $V_{4-20}$ of the pores having a pore diameter of from 4 to 20 $\mu$m is larger than the total volume of all pores (the cumulative pore volume $V_{total}$ of the pores having a pore diameter of from 0.005 to 200 $\mu$m) (the $V_{4-20}/V_{total}$ value is 0.8 or more) . On the other hand, the cumulative pore volume

$V_{20-200}$ of the pores having a pore diameter of from 20 to 200 $\mu$m is sufficiently smaller than the total volume of all pores (the $V_{20-200}/V_{total}$ value is 0.1 or less) . When many pores having a diameter of less than 4 $\mu$m exist and when the porous ceramics shaped body is used as ceramics filters such as DPF, the pressure loss of the gas to be treated for filtration (exhaust gas discharged from diesel engines and the like) increases and the gas-treating capability tends to lower. When many pores having a pore diameter of more than 20 $\mu$m exist and when the porous ceramics shaped body is used as ceramic filters such as DPF, the matters to be trapped such as diesel particulates are discharged out of the filter without being adsorbed inside the pores and being deposited on the filter, and the removing capability of the filter may tend to lower. The porous ceramics shaped body satisfying the above formula 2 and formula 3 can provide a ceramics filter having high gas-treating capability and having high capability of removing the matters to be trapped. For attaining higher gas-treating capability and capability of removing matters, $V_{4-20}/V_{total}$ is preferably 0.82 or more, more preferably 0.85 or more, even more preferably 0.9 or more; and $V_{20-200}/V_{total}$ is preferably 0.09 or less, more preferably 0.085 or less, even more preferably 0.08 or less.

(2.5) Foaming Test Characteristics

Based on the foaming test characteristics, the pore structure of the porous ceramics shaped body can be evaluated. Specifically, the presence or absence of the following pores can be evaluated simply. The pores are pores running through the shaped body (especially the pores running through from one surface of the shaped body to the opposite surface thereof) ; in the case of the shaped body having one or more hollow spaces inside it, the pores running from the hollow space inside the shaped body to the outer surface of the shaped body; and the pores running through the partitions between the hollow spaces inside the shaped body; and hereinafter these are generically referred to as through-pores. And the pore diameter of the through-pores can be evaluated simply. Confirming the above-mentioned foaming phenomenon both in water and in 100% ethanol nearly means that through-pores having a pore diameter of more than 25 $\mu$m do not exist and through-pores having a pore diameter of at least more than 7.7 $\mu$m exist.

Preferably, the foaming test characteristics are defined separately in the case where the porous ceramics shaped body has hollow spaces inside it, like a porous ceramic honeycomb structure and the like, and in the case where the porous ceramics does not have hollow spaces. In the case where the porous ceramics shaped body has one or more hollow spaces inside it, a columnar hollow piece in which one hollow space is the through-hole running in the lengthwise direction therein is cut out of the shaped body, and one end in the lengthwise direction thereof is sealed up to prepare a test piece. Next, the test piece is dipped in a liquid phase, and when a gas pressurized up to a gauge pressure of 12 kPa is applied into the through-hole from the open end thereof, the test piece exhibits predetermined foaming test characteristics. In other words, when the test piece is dipped in water (pure water), foams of the gas are not released from at least a part of the surface except both ends in the lengthwise direction (or foams of the gas are not released from any surface). When the test piece is dipped in 100% ethanol, foams of the gas are released from a surface except both ends in the lengthwise direction (preferably, foams of the gas are released from every surface). Such foaming phenomena confirmed in water and in 100% ethanol mean the absence of through-pores having a pore diameter of more than 25 $\mu$m and the presence of through-pores having a pore diameter of at least more than 7.7 $\mu$m. The through-pores in this case are pores running from the hollow spaces inside the shaped body through the outer surface of the shaped body and/or pores running through the partitions between the hollow spaces inside the shaped body. In particular, the foaming phenomena confirmed in a porous ceramics honeycomb structure means the presence of through-pores having a pore diameter of at least more than 7.7 $\mu$m and the absence of through-pores having a pore diameter of more than 25 $\mu$m in the partitions between cells to form the cells inside the honeycomb structure and the outer wall to form the outer surface of the honeycomb structure.

In the case of the porous ceramics shaped body not having one or more hollow spaces inside it, for example, a sheet-like porous ceramics shaped body, a gas pressurized up to a gauge pressure of 12 kPa may be applied to one side and the presence or absence of the above-mentioned phenomenon may be confirmed from the surface opposite to that one side. Confirming the above-mentioned foaming phenomenon means the absence of through-pores having a pore diameter of more than 25 $\mu$m and running through the body from that one side toward the opposite side, and the presence of through-pores having a pore diameter of at least more than 7. $\mu$m and running through the body from that one side toward the opposite side.

The porous ceramics shaped body (for example, porous ceramic honeycomb structure) having the predetermined foaming test characteristics can fully reduce the pressure loss of the gas to be treated for filtration due to the existence of through-pores having a pore diameter of at least more than 7.7 $\mu$m. Accordingly, the gas can be made to pass efficiently through the filter and the gas-treating capability can be increased. In addition, through-pores having a pore diameter of more than 25 $\mu$m do not exist in the body, and therefore the matters to be trapped can be efficiently deposited inside the hollow spaces (cells) and the capability of removing the matters to be trapped can be enhanced.

Preferably, when the porous ceramics shaped body or the test piece is dipped in 5 mass % ethanol aqueous solution, foams of the gas are not released from any surface differing from the surface to which the gas has been applied (in the case of the porous ceramics shaped body having one or more hollow spaces inside it, from the surface except both ends in the lengthwise direction). This means nearly the absence of through-pores having a pore diameter of more than 21 $\mu$m. Consequently, the capability of removing the matters to be trapped can be increased.

The details of the above-mentioned test method are described below. Also when the porous ceramics honeycomb structure is confirmed as to whether or not the structural body could have the above-mentioned foaming test characteristics, the hollow piece thereof is cut out, then one open end of the through-hole therein is sealed up, a gas having a gauge pressure of 12 kPa is applied to one open end, and the presence or absence of foams of the gas from the surface except both ends in the lengthwise direction thereof (four outer surfaces except both ends in the lengthwise direction of the columnar test piece) is confirmed visually.

Regarding the sheet-like porous ceramics shaped body, in evaluating the presence or absence of through-pores running through from one surface to the opposite surface of the body and the pore diameter thereof, the sheet-like porous ceramics shaped body itself may be used in the above-mentioned foaming test, or the test piece cut out of the porous ceramic shaped body may also be used.

In the foaming test, foaming may be confirmed from only a part of the outer surface of the shaped body or the test piece in some cases, while foaming may be confirmed from the entire surface differing from the surface to which the gas has been applied (in the porous ceramics shaped body having one or more hollow spaces inside it, from the entire surface except both ends in the lengthwise direction thereof) in other cases. When the porous ceramics shaped body of the invention is dipped in 100% ethanol, preferably, foaming is confirmed from the entire surface thereof. On the contrary, when the porous ceramic shaped body is dipped in water, preferably, foaming is not confirmed from at least a part of the surface thereof and more preferably, foaming is not confirmed from any site thereof. This means that through-pores having a suitable pore diameter are formed throughout the entire porous ceramics shaped body. The test piece may be dipped in water for the foaming test, the test piece after the test in water may be dipped in 100% ethanol for the foaming test. Multiple test pieces collected from one porous ceramics may be separately dipped in water and in 100% ethanol for the foaming test.

(2.6) Glass Phase

Preferably, the porous ceramics shaped body contains a glass phase. The glass phase means an amorphous phase (silicate glass phase) comprising $SiO_2$ as the main ingredient thereof. The content rate of the glass phase is preferably 5% by mass or less, more preferably 4.5% by mass or less. Also preferably, the content rate of the glass phase is 2% by mass or more. Containing a glass phase in a range of 5% by mass or less, the shaped body can readily satisfy the above-mentioned pore characteristics ($V_{4-20}/V_{total}$ value, $V_{20-200}/V_{total}$ value, foaming test characteristics).

The content rate of the glass phase may be controlled by controlling the content rate of the silicon source powder in the inorganic ingredients to be contained in the starting material mixture. When the content rate of the silicon source powder in the inorganic ingredients to be contained in the starting material mixture is controlled to be 5% by mass or less, then the content rate of the glass phase in the porous ceramics shaped body can be 5% by mass or less. For complexing a glass phase in the porous ceramics shaped body, glass frit is preferably used as the silicon source powder.

The content rate of the glass phase in the porous ceramics shaped body may be measured by ICP emission spectrometry, scanning electron microscope (SEM)-energy dispersion X-ray spectrometry (EDS), transmission electron microscope (TEM)-EDS and the like.

(2.7) Aluminum Magnesium Titanate Crystal

Preferably, the porous ceramics shaped body contains an aluminum magnesium titanate crystal. Containing an aluminum magnesium titanate crystal, the shaped body can readily satisfy the above-mentioned pore characteristics ($V_{4-20}/V_{total}$ value, $V_{20-200}/V_{total}$ value, foaming test characteristics). The aluminum magnesium titanate crystal may be formed by mixing a magnesium source powder in the starting material mixture, and the preferred content thereof is as described above.

The above-mentioned, preferred porous ceramics shaped body that exhibits a high open porosity and excellent pore characteristics ($V_{4-20}/V_{total}$ value, $V_{20-200}/V_{total}$ value, foaming test characteristics) is especially favorably applicable to exhaust gas filters such as DPF.

(3) Foaming Test Method

The details of the foaming test method used in evaluating the pore characteristics of the porous ceramics shaped body are as mentioned below. The foaming test is effective as the means for determining the presence or absence of through-pores (pores running through the shaped body, especially pores running through from one side to the other side opposite to that one side; in the case where the shaped body has one or more hollow spaces inside it, the pores running from the hollow space inside the shaped body to the outer surface thereof; pores running through the partitions between the hollow spaces inside the shaped body) and for measuring the pore diameter thereof, for example, as described above. According to the test method, the presence or absence of through-pores can be determined and the pore diameter of the through-pores can be measured in a simplified manner.

The subject to which the test method is carried out may be any porous ceramics shaped body with no specific limitation. For example, a porous ceramics shaped body suitable for use for ceramics filters can be the test subject, and the shaped body for filters may be a sheet-like shaped body or a shaped body having one or more hollow spaces inside it. The shaped body having one or more hollow spaces inside it includes the shaped bodies exemplified in (2.1).

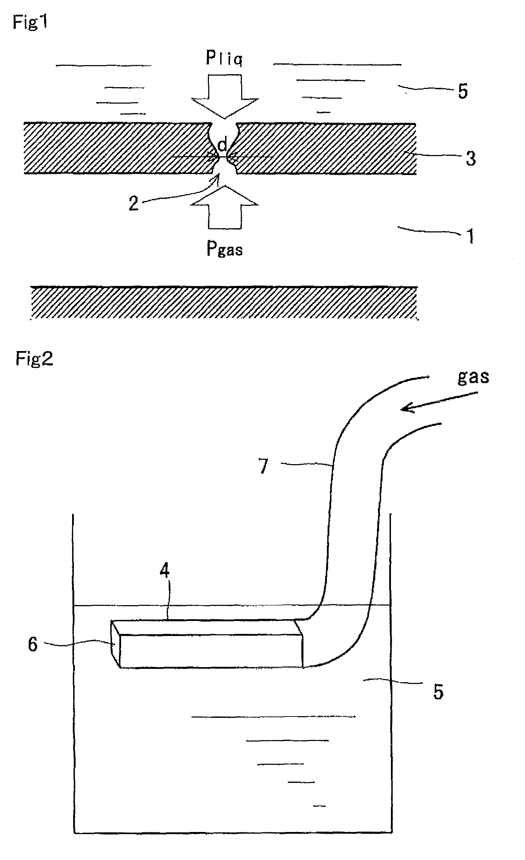

First, the principle of the foaming test method is described. Fig. 1 is a partly enlarged use situation view of a hollow test piece cut out of a porous ceramics honeycomb structure. In more detail, Fig. 1 shows a situation of a hollow test piece, a type of a honeycomb structure having a through-hole of the cell 1 running in the lengthwise direction thereof, dipped in a liquid phase, and schematically shows the pressure (Pgas, Pliq) applied to the cell wall 3 having the through-pore 2. The gas pressure Pgas inside the cell 1 and the liquid pressure Pliq of the liquid phase (liquid) 5 are applied to both sides of the cell wall 3, which is known to follow the following formula (4) (see Chiaki HATANAKA, Kohe MIZUNO, Yasuo HATATE; Environment and Resources Engineering, Vol. 52, No. 4, pp. 167-171 (2005)).

$$Pgas = Pliq + \gamma/d \qquad (4)$$

In the formula (4), $\gamma$ is the surface tension of the liquid 5, and d is the minimum diameter of the through-pore 2 that the cell wall 3 has.

The above formula (4) is satisfied in a balanced situation where the gas does not run through the through-pore 2 to penetrate toward the side of the liquid phase 5 and the liquid 5 does not pass through the through-pore 2 to flow toward the side of the cell 1. In that balanced situation, the formula (4) means that the sum of the cohesive force ($\gamma/d$) of the liquid 5 into the through-pore 2 and the liquid pressure Pliq is the gas pressure Pgas.

When the test piece is disposed as near as possible to the liquid surface of the liquid phase 5, then Pliq could be ignored, and therefore, introducing Pliq = 0 into the formula (4) gives the following formula (5).

$$Pgas = \gamma/d \qquad (5)$$

Based on the above formula (5), it is understandable that the following formula (6) must be satisfied in order that the gas having been applied into the cell 1 could pass through the through-pore 2 to penetrate toward the side of the liquid phase 5, thereby confirming the foaming phenomenon.

$$d > \gamma/Pgas \qquad (6)$$

The above formula (6) indicates the requirement for observation of foaming, and when Pgas is larger, then the minimum diameter d of the through-pore 2 could be smaller. In the case where Pgas is kept constant, the minimum diameter d of the through-pore 2 could be small when the surface tension $\gamma$ of the liquid 5 could be smaller. In other words, by dipping a test piece in the liquid 5 having a known surface tension $\gamma$, then feeding a gas into the cell 1 under a predetermined pressure Pgas and confirming the presence or absence of foaming of the gas, it is possible to evaluate the degree of a minimum diameter d in the through-pore 2 formed through the cell wall 3.

Table 1 shows the minimum diameter (effective pore diameter) of through-pores for confirming foaming in each liquid phase when water, 100% ethanol and their mixed solvent is used as the liquid phase. In Table 1, the surface tension of each liquid phase is also shown. As the supply gas, pressurized air at a gauge pressure of 12 kPa was used.

[Table 1]

| Concentration of Ethanol Aqueos Solution (wt%) | Surface Tension (mN/m) | Effective Pore Diameter ($\mu$m) |
|---|---|---|
| 0 | 73 | 25 |

(continued)

| Concentration of Ethanol Aqueos Solution (wt%) | Surface Tension (mN/m) | Effective Pore Diameter ($\mu$m) |
|---|---|---|
| 5 | 60 | 21 |
| 10 | 48 | 16 |
| 20 | 38 | 13 |
| 30 | 33 | 11 |
| 40 | 30 | 10 |
| 50 | 28 | 9.7 |
| 60 | 27 | 9.3 |
| 70 | 26 | 8.9 |
| 80 | 25 | 8.5 |
| 90 | 24 | 8.1 |
| 1 00 | 22 | 7.7 |

Referring Table 1, for example, when pure water is used as the liquid phase, it is understandable that the effective pore diameter is 25 $\mu$m. This means that, in the case where foaming is confirmed when pure water is used as the liquid phase, through-pores having a pore diameter of more than 25 $\mu$m exist. On the contrary, the above means that, in the case where no foaming is confirmed, no through-pores having a pore diameter of more than 25 $\mu$m exist. Similarly, in the case where 100% ethanol is used as the liquid phase, the effective pore diameter is 7.7 $\mu$m. Accordingly, in the case where foaming is confirmed when 100% ethanol is used as the liquid phase, there can be evaluated the presence of through-pores having a pore diameter of more than 7.7 $\mu$m. On the contrary, in the case where no foaming is confirmed, there can be evaluated the absence of through-pores having a pore diameter of more than 7.7 $\mu$m.

Carrying out the foaming test with plural liquid phases (plural liquid phases each having a different surface tension) makes it possible to more concrete data of the pore diameter of the through-pores. For example, in the case where no foaming is confirmed when pure water is used as the liquid phase but where foaming is confirmed when 10 mass % ethanol aqueous solution is used, there can be evaluated the presence of through-pores having a pore diameter to fall within a range of from 16 to 25 $\mu$m.

According to the present test method, it is possible to know easily that through-pores exist or not in the cell wall of a porous ceramics honeycomb structure and know easily the pore diameter of the through-pores by the easy evaluation means of visual confirmation of the presence or absence of foaming in the liquid phase.

Concrete operation of the present test method is described with reference to Fig. 2. When a porous ceramics shaped body having one or more hollow spaces is the test subject, a columnar hollow piece in which the hollow space is the through-hole running in the lengthwise direction is cut out, and one open end of the through-hole is sealed up to prepare a test piece 4. When a porous ceramics honeycomb structure is the test subject, a columnar hollow piece containing one cell (or a part thereof) of multiple cells formed inside the ceramics honeycomb structure and the cell wall to surround the four sides of the cell is cut out. The cell constitutes the through-hole of the hollow piece, and the through-hole is parallel to the lengthwise direction of the hollow piece. The length of the hollow piece is, for example, 30 mm. The hollow piece has openings of the cell (through-hole) through both ends in the lengthwise direction thereof, and one end (that is, one opening of the through-hole) is sealed up to prepare the test piece 4. One end of the through-hole may be sealed up, for example, according to a method of forming an epoxy resin layer 6.

Next, a gas introducing tube 7 (for example, rubber tube) for supplying gas is connected to the other end in the lengthwise direction thereof, and then the test piece 4 is dipped in a liquid phase 5. On this occasion, the test piece 4 is disposed as near as possible to the liquid surface of the liquid phase 5 and is so disposed that its lengthwise direction could be parallel. With that, gas is supplied under a predetermined pressure into the through-hole of the test piece 4, and the presence or absence of foaming is confirmed visually.

For a porous ceramics shaped body with no hollow space inside it, or that is, a sheet-like shaped body, the above-mentioned foaming test can be utilized for evaluating the presence or absence of through-pores running from one surface to the opposite surface and the pore diameter thereof. In this case, the sheet-like porous ceramics shaped body itself may be tested, or a test piece cut out of the shaped body may be tested.

The liquid to be used for the liquid phase in the test method is not specifically limited, and a liquid having a suitable surface tension can be selected in accordance with the effective pore diameter of the evaluation subject. The liquid to be used for the liquid phase may be a single liquid or a mixed liquid of multiple types of liquids. By mixing two or more different types of liquid, the surface tension of the mixed liquid may be thereby controlled. The liquid includes, for example, pure water; alcohols (e.g., methanol, ethanol, propanol), and their mixed liquids (mixed solvents). In the liquid, a water-soluble organic matter such as surfactants (e.g., fatty acid salts, alkylbenzenesulfonic acid salts) may be dissolved, and for example, a mixture of water and alcohols or surfactants and the like can be used here.

The gas to be applied to the test piece is not also specifically limited, and for example, air may be used. The pressure of the gas to be applied is not specifically defined so far as it is constant, and for example, the gauge pressure thereof can be 12 kPa.

EXAMPLES

The invention is described in more detail with reference to Examples, but the invention should not be limited to these. In Examples, Reference Examples and Comparative Examples, the particle size distribution of the starting material powder used; the shrinkage ratio in firing of the starting material mixture shaped body; and the aluminum titanate conversion ratio (AT conversion ratio), the pore diameter, the pore diameter distribution and the open porosity of the obtained porous ceramics shaped body were measured by the following methods. In addition, the pore structure of the obtained porous ceramics shaped body was evaluated by the above-mentioned test method (foaming test) of the invention.

(1) Particle Size Distribution of Starting Material Powder

The particle diameter corresponding to a cumulative percentage of 10% on a volume basis (D10), the particle diameter corresponding to a cumulative percentage of 50% on a volume basis (D50) and the particle diameter corresponding to a cumulative percentage of 90% on a volume basis (D90) of the starting material powder were measured, by using a laser diffractiometric particle sizer (Nikkiso's Microtrac HRA (X-100)].

(2) Shrinkage Ratio in Firing

The extrusion cross section (cross section perpendicular to the extrusion direction) of the extrusion-shaped and fired honeycomb-form shaped body was observed and the partition pitch width was measured. In the cross section of the shaped body before firing and the cross section of the shaped body after firing, the partition pitch width was measured at 5 points, and the data were averaged to give the mean length in one direction of the cross section of the shaped body before firing and the mean length in one direction of the cross section of the shaped body after firing. From the data of the mean length, the shrinkage ratio in firing was calculated based on the following formula:

$$\text{Shrinkage Ratio in Firing (\%)} = [1 - (\text{mean length after firing})/ (\text{mean length before firing})] \times 100.$$

(3) AT Conversion Ratio

The aluminum titanate conversion ratio (AT conversion ratio) was calculated by the following formula, from the integrated intensity ($I_T$) of the peak [assigned to the titania-rutile phase (110) face] appearing at the position of $2\theta = 27.4°$ in a powdery X-ray diffraction spectrum and the integrated intensity ($I_{AT}$) of the peak [assigned to the aluminum magnesium titanate phase (230) face] appearing at the position of $2\theta = 33.7°$ therein.

$$\text{AT Conversion Ratio} = I_{AT}/ (I_T + I_{AT}) \times 100 \ (\%).$$

(4) Pore Diameter

The small pieces of about 2 mm square obtained by grinding 0.4 g of the fired body were dried in air at 120°C for 4 hours, using an electric furnace. The obtained dry matter was analyzed to measure the pore diameter in a detection range of from 0.001 to 100.0 $\mu$m by a mercury intrusion method. The value obtained by doubling the pore diameter showing the maximum frequency on a pore volume basis was taken as the pore diameter (mode diameter). As the measurement apparatus, Micrometrics' "Autopore III9420" was used.

(5) Pore Diameter Distribution

The small pieces of about 2 mm square obtained by grinding 0.4 g of the fired body were dried in air at 120°C for 4 hours, using an electric furnace. The obtained dry matter was analyzed to measure the pore diameter in a detection range of from 0.005 to 200.0 $\mu$m by a mercury intrusion method.
In Examples 1 and 2 and Comparative Examples 1 and 2, the cumulative pore volume $V_{4-20}$ of the pores having a pore diameter of from 4 to 20.0 $\mu$m, the cumulative pore volume $V_{20-200}$ of the pores having a pore diameter of from 20.0 to 200.0 $\mu$m, and the cumulative pore volume $V_{total}$ of the pores having a pore diameter of from 0.005 to 200.0 $\mu$m were calculated as the value per gram of the shaped body. In Examples 3 to 8, Reference Examples 1 to 3 and Comparative Examples 3 and 4, the cumulative pore volume $V_{0.005-4}$ of the pores having a pore diameter of from 0.005 to 4.0 $\mu$m, the cumulative pore volume $V_{4-20}$ of the pores having a pore diameter of from 4.0 to 20.0 $\mu$m, the cumulative pore volume $V_{20-200}$ of the pores having a pore diameter of from 20.0 to 200.0 $\mu$m, and the cumulative pore volume $V_{total}$ of the pores having a pore diameter of from 0.005 to 200.0 $\mu$m were calculated as the value per gram of the shaped body.
As the measurement apparatus, Micrometrics' "Autopore III9420" was used.

(6) Open Porosity

By an Archimedes method by dipping in water according to JIS R1634, the weight in water M2 (g), the water-saturated weight M3 (g) and the dry weight M1 (g) of the fired body were measured, and the porosity was calculated by the following formula:

$$\text{Porosity (\%)} = 100 \times (M3 - M1)/(M3 - M2).$$

(7) Foaming Test

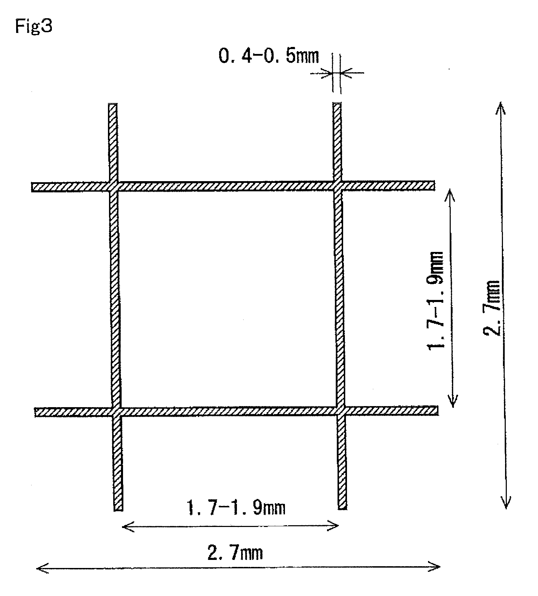

A columnar hollow piece containing a part of one cell that the shaped body had and the cell wall to surround the four sides of the cell was cut out of the obtained honeycomb-form fired body. The cell is the through-hole in the lengthwise direction of the hollow piece, and the through-hole is parallel to the lengthwise direction of the hollow piece. The length of the hollow piece is 30 mm. The hollow piece contains the cell constituting the through-hole and a part of the cell wall partitioning that cell from the adjacent cell. Accordingly, the hollow piece has the cross section form as shown in Fig. 3. The length of the horizontal and vertical size in the cross section is 2.7 mm each in the longest part. The thickness of the cell wall is from 0.4 to 0.5 mm, and the cross section form of the through-hole (cell) is a square having a horizontal and vertical size of from 1.7 to 1.9 mm each.
Subsequently, one open end of the through-hole of the hollow piece was sealed up with an epoxy resin to prepare a test piece.
Next, the other open end in which tlorough-hole remains was inserted into a hose (gas introducing tube). Subsequently, the test piece was dipped in a liquid phase, as in the situation shown in Fig. 2. On this occasion, the test piece was disposed near to the liquid surface of the liquid phase and was so disposed that its lengthwise direction could be parallel. Via the gas introducing tube, air pressurized up to a gauge pressure of 12 kPa was applied into the through-hole of the test piece, and the presence or absence of foaming from the surface of the test piece and the foaming condition thereof were checked visually. As the liquid phase, used was any of pure water, 5 mass % ethanol aqueous solution, 10 mass % ethanol aqueous solution and 100% ethanol.

Example 1

As the starting material powders, the following were used. The prepared composition of the following starting material powders is, in terms of the alumina $[Al_2O_3]$-equivalent, titania $[TiO_2]$-equivalent, magnesia [MgO]-equivalent and silica $[SiO_2]$-equivalent molar ratio thereof, $[Al_2O_3]/[TiO_2]/[MgO]/[SiO_2]$ = 35.1%/51.3%/9.6%/4.0%. Accordingly, $[Al_2O_3]/[TiO_2]$ = 40.6/59.4, and $[MgO]/([Al_2O_3]+[TiO_2])$ = 11.1/88.9. The content ratio of the silicon source powder in the total of the aluminum source powder, the titanium source powder, the magnesium source powder and the silicon source powder was 4.0% by mass.

(1) Aluminum source powder
Aluminum oxide powder A ($\alpha$-alumina powder) having the particle size distribution (D10, D50     29 parts by mass and D90) shown in the following Table 2

(continued)

| | |
|---|---|
| (2) Titanium source powder: | |
| Titanium oxide powder (rutile-form crystal) having D50 of 1.0 $\mu$m | 49 parts by mass |
| (3) Magnesium source powder: | |
| Magnesia spinel powder having D50 of 5.5 $\mu$m | 18 parts by mass |
| (4) Silicon source powder: Glass frit (Takara Standard's "CK0832") having D50 of 8.5 $\mu$m | 4 parts by mass |

Relative to 100 parts by mass of the mixture of the above aluminum source powder, titanium source powder, magnesium source powder and silicon source powder, added were, methyl cellulose in an amount of 9.8 parts by mass as a binder, polyoxyalkylene alkyl ether in an amount of 5.8 parts by mass as a surfactant, and glycerin in an amount of 0.5 parts by mass and stearic acid in an amount of 1.5 parts by mass as a lubricant, and further water was added thereto in an amount of 30 parts by mass as a dispersant, and then kneaded with a kneader to prepare a mixture (a starting material mixture for shaping). Next, the mixture was shaped by extrusion to produce a honeycomb-form shaped body (having a cell density of 100 cpsi and a cell wall thickness of 0.5 mm). In an air atmosphere, the obtained honeycomb-form shaped body was fired in a process including a degreasing step to remove the binder, thereby giving a honeycomb-form porous fired body. The highest temperature in firing was 1450°C, and the soaking time at the highest temperature was 5 hours.

The obtained porous fired body was pulverized in a mortar, and the resulting powder was analyzed by powdery X-ray diffractometry to give the diffraction spectrum thereof. The powder had a crystal peak of aluminum magnesium titanate. The AT conversion ratio of the powder was determined, and was 100 %. Table 3 shows the shrinkage ratio in firing of the starting material mixture shaped body, and the pore diameter, the pore diameter distribution and the open porosity of the obtained aluminum titanate-based fired body. Table 4 shows the results of the foaming test. From the results shown in Table 4 and the above Table 1, it is understandable that the honeycomb structure comprising the aluminum titanate-based fired body obtained in this Example does not have through-pores having a pore diameter of more than about 20 $\mu$m in the cell wall thereof but has, on the other hand, through-pores having a pore diameter of more than 16 $\mu$m throughout the entire honeycomb structure.

Example 2

A honeycomb-form porous fired body was obtained in the same manner as in Example 1, except that, the following starting material powders were used. The prepared composition of the starting material powders mentioned below is, in terms of the alumina [$Al_2O_3$]-equivalent, titania [$TiO_2$]-equivalent, magnesia [$MgO$]-equivalent and silica [$SiO_2$]-equivalent molar ratio thereof, [$Al_2O_3$]/[$TiO_2$]/[$MgO$]/[$SiO_2$] = 34.3%/50.2%/9.4%/6.1%. Acco-rdingly, [$Al_2O_3$]/[$TiO_2$] = 40.6/59.4, and [$MgO$]/([$Al_2O_3$]+[$TiO_2$]) = 11.1/88. 9. The content ratio of the silicon source powder in the total of the aluminum source powder, the titanium source powder, the magnesium source powder and the silicon source powder was 6.1% by mass.

| | |
|---|---|
| (1) Aluminum source powder: | |
| Aluminum oxide powder A ($\alpha$-alumina powder) having the particle size distribution (D10, D50 and D90) shown in the following Table 2 | 28 parts by mass |
| (2) Titanium source powder: | |
| Titanium oxide powder (rutile-form crystal) having D50 of 1.0 $\mu$m | 48 parts by mass |
| (3) Magnesium source powder: | |
| Magnesia spinel powder having D50 of 5.5 $\mu$m | 18 parts by mass |
| (4) Silicon source powder: | |
| Glass frit (Takara Standard's "CK0832") having D50 of 8.5 $\mu$m | 6.1 parts by mass |

The obtained porous fired body was pulverized in a mortar, and the resulting powder was analyzed by powdery X-ray diffractometry to give the diffraction spectrum thereof. The powder had a crystal peak of aluminum magnesium titanate. The AT conversion ratio of the powder was determined, and was 100 %. Table 3 shows the shrinkage ratio in firing of the starting material mixture shaped body, and the pore diameter, the pore diameter distribution and the open porosity of the obtained aluminum titanate-based fired body. Table 4 shows the results of the foaming test. From the results shown in Table 4 and the above Table 1, it is understandable that the honeycomb structure comprising the aluminum titanate-based fired body obtained in this Example has through-pores having a pore diameter of more than 25 $\mu$m in a part of the cell wall thereof and has through-pores having a pore diameter of more than about 20 $\mu$m throughout

the entire honeycomb structure.

Comparative Example 1

A honeycomb-form porous fired body was obtained in the same manner as in Example 1, except that, the starting material powders mentioned below were used. The prepared composition of the starting material powders mentioned below is, in terms of the alumina $[Al_2O_3]$-equivalent, titania $[TiO_2]$-equivalent, magnesia $[MgO]$-equivalent and silica $[SiO_2]$-equivalent molar ratio thereof, $[Al_2O_3]/[TiO_2]/[MgO]/[SiO_2]$ = 35.1%/51.3%/9.6%/4.0%. Accordingly, $[Al_2O_3]/[TiO_2)]$ = 40. 6/59.4, and $[MgO] / ([Al_2O_3] + [TiO_2])$ = 11.1/88.9. The content ratio of the silicon source powder in the total of the aluminum source powder, the titanium source powder, the magnesium source powder and the silicon source powder was 4.0% by mass.

|  |  |
|---|---|
| (1) Aluminum source powder: |  |
| Aluminum oxide powder C ($\alpha$-alumina powder) having the particle size distribution (D10, D50 and D90) shown in the following Table 2 | 29 parts by mass |
| (2) Titanium source powder: |  |
| Titanium oxide powder (rutile-form crystal) having D50 of 1.0 $\mu$m | 49 parts by mass |
| (3) Magnesium source powder: |  |
| Magnesia spinel powder having D50 of 5.5 $\mu$m | 18 parts by mass |
| (4) Silicon source powder: |  |
| Glass frit (Takara Standard's "CK0832") having D50 of 8.5 $\mu$m | 4 parts by mass |

The obtained porous fired body was pulverized in a mortar, and the resulting powder was analyzed by powdery X-ray diffractometry to give the diffraction spectrum thereof. The powder had a crystal perk of aluminum magnesium titanate. The AT conversion ratio of the powder was determined, and was 100 %. Table 3 shows the shrinkage ratio in firing of the starting material mixture shaped body, and the pore diameter, the pore diameter distribution and the open porosity of the obtained aluminum titanate-based fired body. Table 4 shows the results of the foaming test. From the results shown in Table 4 and the above Table 1, it is understandable that the honeycomb structure comprising the aluminum titanate-based fired body obtained in this Comparative Example has through-pores having a pore diameter of more than about 20 $\mu$m in a part of the cell wall thereof.

Comparative Example 2

A honeycomb-form porous fired body was obtained in the same manner as in Example 1, except that, the starting material powders mentioned below were used. The prepared composition of the starting material powders mentioned below is, in terms of the alumina $[Al_2O_3]$-equivalent, titania $[TiO_2]$-equivalent, magnesia $[MgO]$-equivalent and silica $[SiO_2]$-equivalent molar ratio thereof, $[Al_2O_3]/[TiO_2]/[MgO]/[SiO_2]$ = 35.1%/51.3%/9.6%/4.0%. Accordingly, $[Al_2O3]/[TiO_2]$ = 40.6/59.4, and $[MgO]/([Al_2O_3]+[TiO_2])$ = 11.1/88.9. The content ratio of the silicon source powder in the total of the aluminum source powder, the titanium source powder, the magnesium source powder and the silicon source powder was 4.0% by mass.

|  |  |
|---|---|
| (1) Aluminum source powder: |  |
| Aluminum oxide powder D ($\alpha$-alumina powder) having the particle size distribution (D10, D50 and D90) shown in the following Table 2 | 29 parts by mass |
| (2) Titanium source powder: |  |
| Titanium oxide powder (rutile-form crystal) having D50 of 1.0 $\mu$m | 49 parts by mass |
| (3) Magnesium source powder: |  |
| Magnesia spinel powder having D50 of 5.5 $\mu$m | 18 parts by mass |
| (4) Silicon source powder: |  |
| Glass frit (Takara Standard's "CK0832") having D50 of 8.5 $\mu$m | 4 parts by mass |

The obtained porous fired body was pulverized in a mortar, and the resulting powder was analyzed by powdery X-ray diffractometry to give the diffraction spectrum thereof. The powder had a crystal peak of aluminum magnesium titanate. The AT conversion ratio of the powder was determined, and was 100 %. Table 3 shows the shrinkage ratio in firing of the starting material mixture shaped body, and the pore diameter, the pore diameter distribution and the open porosity of the obtained aluminum titanate-based fired body. Table 4 shows the results of the foaming test. From the results shown in Table 4 and the above Table 1, it is understandable that the honeycomb structural body comprising the aluminum titanate-based fired body obtained in this Comparative Example has through-pores having a pore diameter of more than 25 $\mu$m in a part of the cell wall thereof.

[Table 2]

| Aluminum Oxide Powder | D10 ($\mu$m) | D50 ($\mu$m) | D90 ($\mu$m) | (D90/D10)$^{1/2}$ ($\mu$m) |
|---|---|---|---|---|
| A | 20.2 | 41.6 | 64.8 | 1.79 |
| B | 17.0 | 27.3 | 41.8 | 1.57 |
| c | 4.1 | 11.4 | 30.9 | 2.76 |
| D | 5.1 | 16.0 | 49.5 | 3.10 |

[Table 3]

| | Shrinkage Ratio in Firing (%) | Pore Diameter ($\mu$m) | Open Porosity (%) | $V_{40-20}/V_{total}$ | $V_{20-200}/V_{total}$ |
|---|---|---|---|---|---|
| Example 1 | 6.9 | 8.5 | 43.6 | 0.879 | 0.081 |
| Example 2 | 9.8 | 10.7 | 37.1 | 0.839 | 0.132 |
| Comparative Example 1 | 13.2 | 5.3 | 34.4 | 0.824 | 0.136 |
| Comparative Example 2 | 13.3 | 8.5 | 35.1 | 0.764 | 0.158 |

[Table 4]

| Liquid Phase | Example1 | Example2 | Comparative Example1 | Comparative Example2 |
|---|---|---|---|---|
| Pure Water | C | B | C | B |
| 5 wt% ethanol aqueous solution | C | A | B | B |
| 10 wt% ethanol aqueous solution | A | A | B | B |
| Pure Ethanol | A | A | B | B |
| A: Foam release from the entire surface except both ends in lengthwise direction is confirmed. B: Foam release from a part of the surface except both ends in lengthwise direction is confirmed. C: Foam release is not confirmed. | | | | |

Examples 3 to 8, Reference Examples 1 to 3, and Comparative Examples 3 and 4

The inorganic powders [aluminum source powder ($\alpha$-alumina powder), titanium source powder (TiO$_2$ powder of rutile-form crystal), magnesium source powder (magnesia spinel powder) and silicon source powder (glass frit, Takara Standard's "CK0832")] and the pore forming agent shown in Table 5 were mixed in the ratio by mass shown in Table 5. Subsequently, relative to 100 parts by mass of the mixture, methyl cellulose as a binder, polyoxyalkylene alkyl ether as a dispersant (surfactant), and glycerin and stearic acid as a lubricant were added to the mixture in the ratio by mass shown in Table 5, and further water as a dispersant was added thereto, and then kneaded with a kneader to prepare a mixture (a starting material mixture) for shaping. Next, the mixture was shaped by extrusion to produce a honeycomb-form shaped body having a columnar outward configuration having a square cross section of 25 x 25 mm or a circular cross section with a diameter of 160 mm and having a length of 20.5 mm or 250 mm. In an air atmosphere, the obtained shaped body was fired in a process including a prefiring (degreasing) step to remove the pore forming agent and other additives (binder, dispersant, lubricant and water) thereby giving a honeycomb-form porous fired body (honeycomb structure). The temperature (highest temperature) in firing and the firing time (holding time at the highest temperature) are shown in Table 5. The particle size distribution of the aluminum powders A to D used as the aluminum source powder is shown in Table 2; D50 of the titanium oxide powders a to d, the magnesia spinel powder and the glass frit used as the titanium source, magnesium source and silicon source powders is shown in Table 6; and the particle size distribution of the pore forming agent used is shown in Table 7. The graphite powder used in Reference Example 3 is SEC Carbon's "SGP-25".

[Table 5]

| | | Example 3 | Example 4 | Example 5 | Example 6 | Example 7 | Example 8 | Reference Example 1 | Reference Example2 | Comparative Example 3 | Comparative Example 4 | Reference Example 3 |
|---|---|---|---|---|---|---|---|---|---|---|---|---|
| Al Source Powder [1] | Aluminum Oxide Powder A | | 25.9 | 24.6 | 24.6 | 24.6 | 24.6 | 27.9 | 23.0 | | | |
| | Aluminium Oxide Powder B | 25.9 | | | | | | | | | | 25.9 |
| | Aluminum Oxide Powder C | | | | | | | | | 28.7 | | |
| | Aluminum Oxide Powder D | | | | | | | | | | 28.7 | |
| Ti Source Powder[1] | Titanium Oxide Powder a | | 44.1 | 42.0 | 42.0 | 42.0 | 42.0 | | | | | |
| | Titanium Oxide Powder b | 44.1 | | | | | | | | | | 44.1 |
| | Titanium Oxide Powder c | | | | | | | 48.0 | | 49.0 | 49.0 | |
| | Titanium Oxide Powder d | | | | | | | | 45.6 | | | |
| Mg Source Powder[1] | Magnesia Spinel Powder | 16.5 | 16.5 | 15.7 | 15.7 | 15.7 | 15.7 | 17.9 | 16.0 | 18.3 | 18.3 | 16.5 |
| Si Source Powder[1] | Glass Frit | 3.6 | 3.6 | 3.4 | 3.4 | 3.4 | 3.4 | 6.1 | 5.5 | 4.0 | 4.0 | 3.6 |
| Pore Forming Agent[1] | Polymethylmethacrylate Beads | 10.0 | 10.0 | | | | | | 10.0 | | | |
| | Corn Starch | | | | | 14.3 | 14.3 | | | | | |
| | Potato Starch | | | 14.3 | 14.3 | | | | | | | |
| | Graphite Powder | | | | | | | | | | | 10.0 |

EP 2 386 530 A1

(continued)

| | | Example 3 | Example 4 | Example 5 | Example 6 | Example 7 | Example 8 | Reference Example 1 | Reference Example2 | Comparative Example 3 | Comparative Example 4 | Reference Example 3 |
|---|---|---|---|---|---|---|---|---|---|---|---|---|
| | Total (%) | 100.1 | 100.1 | 100.0 | 100.0 | 100.0 | 100.0 | 99.9 | 100.1 | 100.0 | 100.0 | 100.1 |
| Prepared Composition of Starting Material Powders | $[Al_2O_3]/[TiO_2]/[MgO]/[SiO_2]$ (molar ratio) 2) | 35.1/51.3/9.6/4.0 | 35.1/51.3/9.6/4.0 | 35.1/51.3/9.6/4.0 | 35.1/51.3/9.6/4.0 | 35.1/51.3/9.6/4.0 | 35.1/51.3/9.6/4.0 | 34.3/50.2/9.4/6.1 | 34.3/50.2/9.4/6.1 | 35.1/51.3/9.6/4.0 | 35.1/51.3/9.6/4.0 | 35.1/51.3/9.6/4.0 |
| | $[Al_2O_3]/[TiO_2]$ (molar ratio)2) | 40.6/59.4 | 40.6/59.4 | 40.6/59.4 | 40.6/59.4 | 40.6/59.4 | 40.6/59.4 | 40.6/59.4 | 40.6/59.4 | 40.6/59.4 | 40.6/59.4 | 40.6/59.4 |
| | $[MgO]/([Al_2O_3]+[TiO_2])$ (molar ratio)2) | 11.1/88.9 | 11.1/88.9 | 11.1/88.9 | 11.1/88.9 | 11.1/88.9 | 11.1/88.9 | 11.1/88.9 | 11.1/88.9 | 11.1/88.9 | 11.1/88.9 | 11.1/88.9 |
| | Content of Si Source Powder in inorganic powders (wt%)3) | 4.0 | 4.0 | 4.0 | 4.0 | 4.0 | 4.0 | 6.1 | 6.1 | 4.0 | 4.0 | 4.0 |
| Binder(parts by mass)4) | | 9.8 | 9.8 | 9.8 | 9.8 | 9.8 | 9.8 | 7.5 | 7.5 | 5.8 | 5.8 | 9.8 |
| D Dispersant (parts by mass)4) | | 5.8 | 5.8 | 5.8 | 5.8 | 5.8 | 5.8 | 5.8 | 5.8 | 5.8 | 5.8 | 5.8 |
| Lubricant | Glycerin(parts by mass)4) | 0.5 | 0.5 | 0.5 | 0.5 | 0.5 | 0.5 | 0.5 | 0.5 | 0.5 | 0.5 | 0.5 |
| | Stearic Acid(parts by mass)4) | | | | | | | | | 1.5 | 1.5 | |
| Dispersion Media (parts by mass)4) | | 24.5 | 30.3 | 28.2 | 28.2 | 26.9 | 26.9 | 26.3 | 24.1 | 30.8 | 29.8 | 26.3 |
| Firing Condition | Firing Temperature (°C) | 1450 | 1450 | 1450 | 1500 | 1450 | 1500 | 1500 | 1450 | 1500 | 1450 | 1450 |
| | Firing Time (hour) | 5 | 5 | 5 | 5 | 5 | 5 | 5 | 5 | 5 | 15 | 5 |

1) The value of each starting material powders is indicated as the content (weight %) in the total of Al source powder, Ti source powder, Mg source powder, Si source powder and pore forming agent.
2) Alumina[Al2O3]-equivalent, titania[TiO2]-eqnivalent, magnesia[MgO]-equivalent, and silica[SiO2]-equivalent molar ratio is indicated.
3)Inorganic Powders measn Al source powder, Ti source powder, Mg source powders, and Si source powder.
4)It is a value relative to 100 parts by mass of inorganic powders and a pore forming agent.

[Table 6]

|  | D50 (μm) |
|---|---|
| Titanium Oxide Powder a | 0.93 |
| Titanium Oxide Powder b | 0.88 |
| Titanium Oxide Powder c | 0.96 |
| Titanium Oxide Powder d | 0.41 |
| Magnesia Spinel Powder | 5.2 |
| Glass Frit | 8.8 |

[Table 7]

|  | D50 (μm) | $(D90/D10)^{1/2}$ |
|---|---|---|
| Polymethylmethacrylate Beads | 28.7 | 1.45 |
| Corn Starch | 15.4 | 1.41 |
| Potato Starch | 25.3 | 1.45 |
| Graphite Powder | 25.3 | 2.59 |

Table 8 shows the AT conversion ratio, the open porosity and the pore diameter distribution of the porous honeycomb structures obtained in Examples, Reference Examples and Comparative Examples. In Examples 3 to 8, $(D90/D10)^{1/2}$ of the aluminum source powder and the pore forming agent was less than 2 and the content ratio of the silicon source powder in the inorganic ingredients was 5% by mass or less, and therefore, obtained were porous ceramics shaped bodies having an open porosity of 45% by volume or more, $V_{4-20}/V_{total}$ of 0.8 or more and $V_{20-200}/V_{total}$ of 0.1 or less, that is, having excellent pore characteristics.

In contrast to this, in Reference Examples 1 and 2 where the content of the silicon source powder in the inorganic ingredients was more than 5% by mass, $V_{4-20}/V_{total}$ was around 0.7, and $V_{20-200}/V_{total}$ was from 0.2 to 0.3 or so. In Comparative Examples 3 and 4 where $(D90/D10)^{1/2}$ of the aluminum source powder was more than 2 and no pore forming agent was used, obtained were shaped bodies having a low open porosity and having many pores with a pore diameter of from 20 to 200 μm existing therein. In Comparative Example 3 where a pore forming agent having $(D90/D10)^{1/2}$ of more than 2 was used, the open porosity was 40.2%.

[Table 8]

| | Example 3 | Example 4 | Example 5 | Example 6 | Example 7 | Example 8 | Reference Example 1 | Reference Example 2 | Comparative Example 3 | Comparative Example 4 | Reference Example 3 |
|---|---|---|---|---|---|---|---|---|---|---|---|
| AT Conversion Ratio(%) | 100 | 100 | 100 | 100 | 100 | 100 | 100 | 100 | 100 | 100 | 100 |
| Open Porosity (volume %) | 46.2 | 47.3 | 49.0 | 49.0 | 48.9 | 45.0 | 32.3 | 49.8 | 29.6 | 29.8 | 40.2 |
| $V_{0.005-4}$ (mL/g) | 0.007 | 0.006 | 0.003 | 0.004 | 0.003 | 0.004 | 0.005 | 0.007 | 0.005 | 0.010 | 0.004 |
| $V_{4-20}$(mL/g) | 0.215 | 0.222 | 0.248 | 0.243 | 0.246 | 0.201 | 0.093 | 0.189 | 0.092 | 0.102 | 0.171 |
| $V_{20-200}$ (mL/g) | 0.010 | 0.014 | 0.008 | 0.013 | 0.007 | 0.011 | 0.031 | 0.071 | 0.017 | 0.021 | 0.006 |
| $V_{4-20}/V_{total}$ | 0.926 | 0.917 | 0.958 | 0.936 | 0.964 | 0.930 | 0.721 | 0.708 | 0.808 | 0.764 | 0.941 |
| $V_{20-200}/V_{total}$ | 0.045 | 0.059 | 0.029 | 0.050 | 0.026 | 0.053 | 0.238 | 0.267 | 0.146 | 0.158 | 0.034 |

The mode and Examples for carrying out the invention disclosed at this time are exemplification in all aspects, and those should be considered unlimitedly. The scope of the invention is indicated not by the above-mentioned description but by the claims, and is intended to comprise all variations in the meaning and in the range of claims-equivalent.

INDUSTRIAL APPLICABILITY

The invention relates to a porous ceramics shaped body. The porous ceramics shaped body can be favorably used, for example, for ceramics filters such as exhaust gas filters (especially DPF), selective permeation filters; tools for firing furnaces; catalyst carriers; electronic parts and the like.

DESCRIPTION OF REFERENCE NUMERALS

1    Cell
2    Through-Pore
3    Cell Wall
4    Test Piece
5    Liquid Phase
6    Epoxy Resin Layer
7    Gas Introducing Tube

**Claims**

1. A process for producing of a porous ceramics shaped body, comprising a step of firing a shaped body of a starting material mixture which contains an aluminum source powder and a titanium source powder, the aluminum source powder satisfying the below formula (1a) :

$$(Da90/Da10)^{1/2} < 2 \qquad (1a)$$

   wherein Da90 is a particle diameter corresponding to a cumulative percentage of 90 % on a volume basis and Da10 is a particle diameter corresponding to a cumulative percentage of 10 % on a volume basis, and these are determined from a particle size distribution of the aluminum source powder measured by a laser diffractometry.

2. The process according to claim 1, wherein a ratio of a $Al_2O_3$-equivalent molar amount of the aluminum source powder to a $TiO_2$-equivalent molar amount of the titanium source powder (the $Al_2O_3$-equivalent molar amount of the aluminum source powder / the $TiO_2$-equivalent molar amount of the titanium source powder) in the starting material mixture is from 35/65 to 45/55.

3. The process according to claim 1 or 2, wherein a particle diameter D50 of the aluminum source powder corresponding to a cumulative percentage of 50 % on a volume basis measured by a laser diffractometry is from 20 to 60$\mu$m.

4. The process according to any one of claims 1 to 3, wherein a particle diameter D50 of the titanium source powder corresponding to a cumulative percentage of 50 % on a volume basis measured by a laser diffractometry is from 0.5 to 25$\mu$m.

5. The process according to any one of claims 1 to 4, wherein the starting material mixture further contains a magnesium source powder.

6. The process according to claim 5, wherein a particle diameter D50 of the magnesium source powder corresponding to a cumulative percentage of 50 % on a volume basis measured by a laser diffractometry is from 0.5 to 30$\mu$m.

7. The process according to claim 5 or 6, wherein a ratio of a MgO-equivalent molar amount of the magnesium source powder to a total of a $Al_2O_3$-equivalent molar amount of the aluminum source powder and a $TiO_2$-equivalent molar amount of the titanium source powder is from 0.03 to 0.15.

8. The process according to any one of claims 1 to 7, wherein the starting material mixture further contains a silicon source powder.

9. The process according to claim 8, wherein the silicon source powder is feldspar, glass frit, or a mixture thereof.

10. The process according to claim 8 or 9, wherein a particle diameter D50 of the silicon source powder corresponding to a cumulative percentage of 50 % on a volume basis measured by a laser diffractometry is from 0.5 to 30$\mu$m.

11. The process according to any one of claims 8 to 10, wherein a content of the silicon source powder contained in the starting material mixture is 5 weight % or less in an inorganic component contained in the starting material mixture.

12. The process according to any one of claims 1 to 11, wherein the starting material mixture further contains a pore-forming agent.

13. The process according to claim 12, wherein the pore-forming agent satisfies a below formula (1b) :

$$(Db90/Db10)^{1/2} < 2 \quad (1b)$$

wherein Db90 is a particle diameter corresponding to a cumulative percentage of 90 % on a volume basis and Db10 is a particle diameter corresponding to a cumulative percentage of 10 % on a volume basis, and these are determined from a particle size distribution of the pore-forming agent measured by a laser diffractometry.

14. The process according to claim 12 or 13, wherein a particle diameter D50 of the pore-forming agent corresponding to a cumulative percentage of 50 % on a volume basis measured by a laser diffractometry is from 10 to 50$\mu$m.

15. The process according to any one of claims 1 to 14, wherein the shaped body is a honeycomb.

16. A porous ceramics shaped body which is formed of an aluminum titanate-based crystal, wherein an open porosity is 35 % or more and a pore diameter distribution measured by a mercury intrusion technique satisfies a below formula (2) and (3) :

$$V_{4-20} / V_{total} \geq 0.8 \quad (2)$$

$$V_{20-200} / V_{total} \leq 0.1 \quad (3)$$

wherein $V_{4-20}$ is a cumulative pore volume of pores having a pore diameter of from 4$\mu$m to 20$\mu$m, $V_{20-200}$ is a cumulative pore volume of pores having a pore diameter of from 20$\mu$m to 200$\mu$m, and $V_{total}$ is a cumulative pore volume of pores having a pore diameter of from 0.005$\mu$m to 200$\mu$m.

17. The porous ceramics shaped body according to claim 16, wherein the open porosity is 45 % or more.

18. A porous ceramics shaped body which is formed of an aluminum titanate-based crystal, wherein

when the shaped body or a test piece cut out of the shaped body is dipped in water and when a gas pressurized up to a gauge pressure of 12 kPa is applied to any one of surface of the shaped body or the test piece, foams of the gas are not released from any surface differing from the surface to which the gas has been applied, and
when the shaped body or the test piece cut out of the shaped body is dipped in 100% ethanol and when a gas pressurized up to a gauge pressure of 12 kPa is applied to any one of surface of the shaped body or the test piece, foams of the gas are released from a surface differing from the surface to which the gas has been applied.

19. The porous ceramics shaped body according to claim 18, which is formed of an aluminum titanate-based crystal and has one or more hollow spaces inside it, wherein

when a test piece, as prepared by cutting the shaped body to give a columnar hollow piece having the above-mentioned one hollow space as a through-hole in the lengthwise direction and by sealing up one end in the lengthwise direction of the hollow piece, is dipped in water and when a gas pressurized up to a gauge pressure of 12 kPa is applied to the test piece from the open end of the through-hole thereof, foams of the gas are not released from at least a part of the surface except both ends in the lengthwise direction of the test piece, and

when the test piece after the water-dipping test is dipped in 100% ethanol and when a gas pressurized up to a gauge pressure of 12 kPa is applied thereto from the open end of the through-hole, foams of the gas are released from a surface except both ends in the lengthwise direction of the test piece.

20. The porous ceramics shaped body according to claim 18 or 19, wherein an open porosity is 35 % or more and a pore diameter distribution measured by a mercury intrusion technique satisfies a below formula (2) and (3):

$$V_{4-20} \; / \; V_{total} \geq 0.8 \quad (2)$$

$$V_{20-200} \; / \; V_{total} \leq 0.1 \quad (3)$$

wherein $V_{4-20}$ is a cumulative pore volume of pores having a pore diameter of from 4$\mu$m to 20$\mu$m, $V_{20-200}$ is a cumulative pore volume of pores having a pore diameter of from 20$\mu$m to 200$\mu$m, and $V_{total}$ is a cumulative pore volume of pores having a pore diameter of from 0.005$\mu$m to 200$\mu$m.

21. A method for evaluating a pore structure of a porous ceramics shaped body, wherein the shaped body or a test piece cut out of the shaped body is dipped in a liquid phase, then a pressurized gas is applied to any surface of the shaped body or the test piece, and the presence or absence of foaming of the gas from a surface differing from the surface to which the gas has been applied is checked.

22. The method according to claim 21 for evaluating the pore structure of a porous ceramic shaped body having one or more hollow spaces inside it, wherein a test piece, as prepared by cutting the shaped body to give a columnar hollow piece having the above-mentioned one hollow space as the through-hole in the lengthwise direction and by sealing up one end in the lengthwise direction thereof, is dipped in a liquid phase, then a pressurized gas is applied to the open end of the through-hole, and the presence or absence of foaming of the gas from the surface except both ends in the lengthwise direction of the test piece is checked.

23. The method according to claim 21 or 22, wherein the liquid phase is selected from water, alcohol, or a mixed solvent of water and alcohol.

Fig1

Fig2

Fig3

<table>
<tr><td colspan="2" style="text-align:center">**INTERNATIONAL SEARCH REPORT**</td><td>International application No.</td></tr>
<tr><td colspan="2"></td><td>PCT/JP2010/050102</td></tr>
</table>

A. CLASSIFICATION OF SUBJECT MATTER
*C04B35/46*(2006.01)i, *B01D39/20*(2006.01)i, *C04B38/00*(2006.01)i, *C04B38/06*(2006.01)i

According to International Patent Classification (IPC) or to both national classification and IPC

B. FIELDS SEARCHED

Minimum documentation searched (classification system followed by classification symbols)
C04B35/46-35/478, B01D39/20, C04B38/00-38/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | WO 2008/078747 A1 (Hitachi Metals, Ltd.),<br>03 July 2008 (03.07.2008),<br>claims 1 to 7; paragraphs [0009], [0013] to<br>[0016], [0021] to [0035], [0037] to [0056]<br>& EP 2098493 A1 | 1-5,7-9,11,<br>12,15-20<br>6,10,13,14<br>21-23 |
| X<br>Y<br>A | WO 2008/005249 A2 (CORNING INC.),<br>10 January 2008 (10.01.2008),<br>claims 1 to 20; paragraphs [0001] to [0057];<br>tables 1 to 9<br>& EP 2038237 A1 & JP 2009-542566 A | 1,3-20<br>6,10,13,14<br>2,21-23 |

☒ Further documents are listed in the continuation of Box C.     ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>19 February, 2010 (19.02.10) | Date of mailing of the international search report<br>09 March, 2010 (09.03.10) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

| International application No. |
|---|
| PCT/JP2010/050102 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP 8-215522 A (Matsushita Electric Industrial Co., Ltd.), 27 August 1996 (27.08.1996), claims 2, 4; paragraphs [0012] to [0014]; tables 1, 2 & US 5846276 A | 13,14 |
| X | JP 2006-95352 A (NGK Insulators, Ltd.), 13 April 2006 (13.04.2006), paragraph [0017] & US 2006/0107641 A1 & EP 1640054 A2 | 21-23 |
| X | JP 2002-357562 A (NGK Insulators, Ltd.), 13 December 2002 (13.12.2002), paragraph [0006] & US 2003/0112437 A1 & EP 1296125 A1 & WO 2002/082035 A1 | 21-23 |

Form PCT/ISA/210 (continuation of second sheet) (April 2007)

<table>
<tr><td><strong>INTERNATIONAL SEARCH REPORT</strong></td><td>International application No.<br>PCT/JP2010/050102</td></tr>
</table>

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:
   The invention in claim 1 does not have a special technical feature, since the invention is described in the following documents 1, 2 and does not have a novelty.  The inventions in claims 1 - 23 are not so linked as to form a single general inventive concept.

   Main invention: claims 1 - 15

                                    (continued to extra sheet)

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**    ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2007)

| INTERNATIONAL SEARCH REPORT | International application No. |
|---|---|
| | PCT/JP2010/050102 |

Continuation of Box No.III of continuation of first sheet(2)

Document 1: WO 2008/078747 A1 (Hitachi Metals, Ltd.), 3 July 2008 (03.07.2008), claims 1 – 7, [0009], [0013] – [0016], [0021] – [0035], [0037] – [0056], & EP 2098493 A1

Document 2: WO 2008/005249 A2 (CORNING INC.), 10 January 2008 (10.01.2008), claims 1 – 20, [0001] - [0057], Table 1 – 9, & EP 2038237 A1 & JP 2009-542566 A

Form PCT/ISA/210 (extra sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 05105704 A

- WO 08078747 A

**Non-patent literature cited in the description**

- **Chiaki HATANAKA ; Kohe MIZUNO ; Yasuo HATATE.** *Environment and Resources Engineering,* 2005, vol. 52 (4), 167-171